# EUROPÄISCHE PATENTANMELDUNG

(11) **EP 3 296 538 A1**
(43) Veröffentlichungstag der Anmeldung: **21.03.2018**
(21) Anmeldenummer: 17190818.9
(22) Anmeldetag: 17.03.2008
(51) Int. Cl.: F02B 29/04, F02M 26/29

(54) **STRÖMUNGSKANAL, WÄRMETAUSCHER, ABGASRÜCKFÜHRSYSTEM, LADELUFT-ZUFÜHRSYSTEM, VERWENDUNG EINES WÄRMETAUSCHERS**

(30) Priorität: 16.03.2007 DE 102007013301
(62) Teilanmeldung aus: 08734634.2
(71) Anmelder: MAHLE Behr GmbH & Co. KG, 70469 Stuttgart (DE)
(72) Erfinder: GESKES, Peter, 73760 Ostfildern (DE); BARWIG, Jürgen, 71665 Vaihingen/Enz (DE); RUCKWIED, Jens, 70176 Stuttgart (DE); FETZER, Tobias, 73760 Ostfildern (DE)
(74) Vertreter: Grauel, Andreas

(57) **Zusammenfassung**

Die Erfindung betrifft einen Strömungskanal (41, 41', 61, 61', 71, 71', 81, 81', 91, 91') für einen Wärmetauscher (30, 40) zum Wärmetausch zwischen einem ersten Fluid (31) und einem zweiten Fluid (33) aufweisend: einen Kanalmantel (63, 63', 73, 73', 83, 83', 93, 93') mit einem von einer Kanalmantelinnenseite (65) umgebenden Innenraum (67); eine Anzahl von im Innenraum (67) an der Kanalmantelinnenseite (65) angeordneten Stegen (69, 79, 79', 89, 89', 99), welcher Strömungskanal 1 zur Führung des ersten Fluids (31) im Innenraum (67) ausgelegten durchströmbaren Querschnitt quer zu einer Strömungskanalachse (94) aufweist. Um einen verbesserten Wärmeübergang bei gleichzeitig noch akzeptablem Druckverlust und reduziertem Verblockungsrisiko zu gewährleisten ist ein als das Vierfache des Verhältnisses aus der Fläche des durchströmbaren Querschnitts zu einem durch das Fluid benetzbaren Umfang definierter hydraulischer Durchmesser in einem Bereich zwischen 1,5 mm und 6 mm vorgesehen. Die Erfindung führt auf einen Wärmetauscher (30, 40), der einen Block mit einer Anzahl von Strömungskanälen (41, 41', 61, 61', 71, 71', 81, 81', 91, 91') dieser Art aufweist, die von dem ersten Fluid (31) durchströmbar sind und die mit einem Fluidanschluss strömungsverbunden sind. Die Erfindung führt auf ein Ladeluftsystem, ein Abgasrückführsystem und eine Verwendung des Wärmetauschers.

## Beschreibung

Die Erfindung betrifft einen Strömungskanal für einen Wärmetauscher zum Wärmetausch zwischen einem ersten Fluid und einem zweiten Fluid aufweisend: einen Kanalmantel mit einem von einer Kanalmantelinnenseite umgebenen Innenraum; eine Anzahl von im Innenraum von einem Kanalmantelinnenseite angeordneten Stegen, welcher Strömungskanal einen zur Führung des ersten Fluids im Innenraum ausgelegten durchströmbaren Querschnitt quer zu einer Strömungskanalachse aufweist. Die Erfindung betrifft weiter, einen Wärmetauscher zum Wärmetausch zwischen einem ersten Fluid und einem zweiten Fluid aufweisend: einen Block zur voneinander getrennten und wärmetauschenden Führung des ersten und zweite Fluids, und einen Fluidanschluss für das erste Fluid; welcher Block ein Gehäuse mit einer von dem zweiten Fluid durchströmbaren Kammer und ein Blockabschlusselement zur Trennung der Kammer und des Fluidanschlusses aufweist. Die Erfindung betrifft weiter ein Abgasrückführsystem, eine Ladeluft-Zuführsystem und eine Verwendung des Wärmetauschers.

Ein eingangs genannter Strömungskanal zur Verwendung bei einem Wärmetauscher ist aus DE37 316 69A1 der Anmelderin bekannt.

Wärmetauscher der eingangs genannten Art haben die Aufgabe ein heisses erstes Fluid mit Hilfe eines kälteren zweiten Fluids zu kühlen, damit das erste Fluid, insbesondere ein Abgas oder Abgas-Luft-Gemisch oder eine Ladeluft der Ansaugluft für eine Brennkraftmaschine, beispielsweise eines Motors, beigemischt werden kann. Das zweite Fluid kann in Form eines Kühlmittels gebildet sein, beispielsweise eines flüssigen oder gasförmigen oder flüssig-gas-gemischten Kühlmittels, welches jedenfalls im Falle eines flüssigen Kühlmittels dem Kühlkreislauf der Brennkraftmaschine entnommen werden kann. Grundsätzlich ist es zur Steigerung eines thermodynamischen Wirkungsgrades anzustreben, dass die Abkühlung bis auf ein möglichst niedriges Temperaturniveau erfolgt. Es ist bekannt, dass das Konzept gekühlter Abgasrückführung oder gekühlter Ladeluft zur Reduzierung von Schadstoffen, insbesondere Stickoxiden im Abgas dienen kann.

Gerade betreffend die Anforderungen heutiger Motoren ist es möglich, mit Abgasrückführkühlern die immer weiter steigenden Anforderungen an die Abgasreinhaltung zu erfüllen. Durch die Abkühlung des Abgases und Wiederzuführung des gekühlten Abgases wird die Verbrennungstemperatur im Motor abgesenkt und führt zu einer verminderten NOₓ - Emission. Steigende Anforderungen an die Schadstoffreduzierung haben den weiteren Ausbau der bekannten Kühlerkonzepte sowie den Entwurf neuer Kühlerkonzepte zur Folge.

Ein Strömungskanal bei einem Wärmetauscher bekannter Art kann aus einem Stahl- oder Edelstahlwerkstoff hergestellt sein. Hier hat sich insbesondere die Korrosionsbeständigkeit von Stahl- und Edelstahlwerkstoffen bewährt.

Es hat sich auch gezeigt, dass Strömungskanäle aus Aluminium oder basierend auf einem Aluminiumwerkstoff deutlich preiswerter herstellbar sind.

Um bei einem Strömungskanal einen Wärmeübergang hinreichend zu verbessern, ist ein Strömungskanal, wie eingangs erläutert, in der Regel mit einer Anzahl von im Innenraum an der Kanalmantelinnenseite angeordneten Stegen ausgestattet. Grundsätzlich kann die Anzahl der Stege zur Erhöhung des Wärmeübergangs beitragen. Bei einer überhöhten Anzahl von Stegen steigt allerdings die Gefahr eines Verblockens durch Rußpartikel, die sich beispielsweise im Abgas, befinden deutlich an. Es hat sich gezeigt, dass bei zu engen Durchtrittsbereichen im Strömungskanal, welche im Wesentlichen durch den durchströmbaren Querschnitt definiert sind, ein Strömungskanal vergleichsweise schnell verschmutzt und sich im schlimmsten Fall teilweise zusetzen kann. Dieser Prozess als auch weitere Maßnahmen zur Erhöhung eines Wärmeübergangs erhöhen in gegenläufiger Weise auch den bei einem Strömungskanal vorhandenen Druckverlust, was im Rahmen moderner Wärmetauscherkonzepte unerwünscht ist.

Neben der in DE 37 316 69 A1 offenbarten Ausgestaltung eines Strömungskanals mit stranggepresstem Kanalmantel, gibt es weitere Arten der Ausgestaltung wie sie beispielsweise aus DE 10 225 812 C1, G 94 065 59.4, DE 36 153 00 C2 und DE 202 05 200 U1 bekannt sind. Allerdings sind dort genannte Strömungskanäle speziell auf eine besondere Anwendungsart abgestimmt und dafür ausgelegt. So ist beispielsweise aus US 5,184,672 ein Strömungskanal für einen Wärmetauscher in Form eines Kondensators bekannt, der mit Flachrohren ausgerüstet ist, die von einem flüssigen Kühlmittel durchströmt werden. Aus US 3,486,489 ist ein Ölkühler bekannt, der mit Flachrohren ausgerüstet ist, die von zu kühlendem Öl durchströmt werden. Aus US 2005/0061488A1 ist ein zur Kühlung von Öl ausgelegter Wärmetauscher bekannt, dessen Strömungskanäle zur Führung des zu kühlenden Öls ausgelegt sind. Der durchströmbare Querschnitt der dort beschriebenen Strömungskanäle ist speziell zur Durchströmung von Öl ausgelegt. In US2005/0061488A1 ist der durchströmbare Querschnitt charakterisiert durch ein Leistungsverhältnis zwischen 3,9 und 8,5, das als Verhältnis eines benetzbaren Umfangs in mm zu einem durchströmbaren Querschnittsbereich des Metallrohres in mm² definiert ist.

Derartige auf die Führung von flüssigen Fluiden ausgelegte Strömungskanäle sind für den Einsatz bei einem Wärmetauscher der eingangs genannten Art nicht geeignet. Der Wärmetauscher der eingangs genannten Art ist insbesondere als ein Abgaswärmetauscher und/oder Ladeluftwärmetauscher ausgebildet. Das erste Fluid ist in dem Fall gasförmig oder dampfförmig, also beispielsweise ein Abgas oder ein Abgasluftgemisch oder eine Ladeluft. Das zweite Fluid ist in dem Fall ein Kühlmittel, insbesondere ein flüssiges oder gasförmiges oder flüssig-gas-gemischtes Kühlmittel. Im Hinblick auf die oben erläuterten Probleme ist es wünschenswert ein verbessertes Auslegungskonzept für einen Strömungskanal zu realisieren.

An dieser Stelle setzt die Erfindung an, deren Aufgabe es ist, einen Strömungskanal anzugeben, der einen verbesserten Wärmeübergang aufweist. Insbesondere soll darüber hinaus ein akzeptabler Druckverlust erreichbar sein und insbesondere ein Verblockungsrisiko reduziert sein. Aufgabe der Erfindung ist es auch ein vorteilhaftes Konzept für einen Wärmetausch sowie ein Abgasrückführsystem und ein Ladeluftzuführsystem anzugeben und eine vorteilhafte Verwendung des Wärmetauschers anzugeben.

Die Aufgabe betreffend den Strömungskanal wir durch einen eingangs genannten Strömungskanal gelöst, bei dem erfindungsgemäß ein als das Vierfache des Verhältnisses aus der Fläche des durchströmbaren Querschnitts zu einem durch das erste Fluid benetzbaren Umfang definierter hydraulischer Durchmesser vorgesehen ist, der in einem Bereich zwischen 1,5 mm und 6 mm liegt.

Die Erfindung geht von der Überlegung aus, dass bei einem Strömungskanal gemäß dem Konzept der Erfindung ein bestimmter Bereich in Bezug auf den hydraulischen Durchmesser nicht über - oder unterschritten werden sollte. Die Erfindung hat erkannt, dass für den Fall, dass der hydraulische Durchmesser zum Beispiel zu groß gewählt wird ein Durchtritt für das erste Fluid, insbesondere ein Abgas oder Abgasluftgemisch oder eine Ladeluft, zwar ausreichend groß sein dürfte, um ein Verblockungsproblem oder ein starkes Verschmutzungsproblem zu vermeiden oder gegebenenfalls auch den Druckverlust niedrig zu halten. Bei einem zu groß gewählten hydraulischen Durchmesser dürfte allerdings ein Wärmeübergang verringert sein. Im umgekehrten Fall, dass ein hydraulischer Durchmesser zu klein gewählt sein sollte, ist es möglich, dass ein Strömungskanal zwar zunächst einen ausreichenden Wärmeübergang zur Verfügung stellt. In solch einem Fall dürfte ein Durchtritt im durchströmbaren Querschnitt, der zu klein gewählt ist, beim Betrieb jedoch vergleichsweise schnell verschmutzen, bzw. im schlimmsten Fall zusetzen, jedenfalls aber zu einem erhöhten Druckverlust führen. Dies würde dann zu einer deutlichen Abnahme der Wärmetauscherleistung eines Wärmetauschers führen. Außerdem dürfte ein Druckverlust überproportional ansteigen für den Fall, dass sich Teile eines Strömungskanals zu stark verschmutzen oder gar zusetzen bzw. verblocken.

Gemäß dem Konzept der Erfindung hat sich der erfindungsgemäße Bereich eines hydraulischen Durchmessers als überlegen gegenüber bisher bekannten Konzepten erwiesen. Ein Strömungskanal gemäß dem Konzept der Erfindung erlaubt es, einen ausreichenden Wärmeübergang bei einem Wärmetauscher zur Verfügung zu stellen und dennoch einen akzeptablen Druckverlust bei gleichzeitig reduziertem Verblockungsrisiko zu gewährleisten.

Insbesondere hat sich bei einem Strömungskanal gemäß dem Konzept einer besonders bevorzugten Weiterbildung der Erfindung auch gezeigt, dass dieser aufgrund des stranggepressten Kanalmantels eine erhöhte Korrosionsbeständigkeit aufweist. Bei einem solchen oder auf andere Weise hergestellten Strömungskanal kann auch ein zusätzlicher Korrosionsschutz vorgesehen sein. Der Strömungskanal gemäß dem Konzept der Erfindung ermöglicht eine verbesserte Lösung für einen Wärmetauscher im Hinblick auf Wärmetauscherleistung, Druckverlust und Verschmutzung sowie gleichzeitig einen Kosten einsparenden Einsatz von vergleichsweise korrosionsbeständigen Werkstoffen, insbesondere stranggepressten Aluminiumwerkstoffen.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

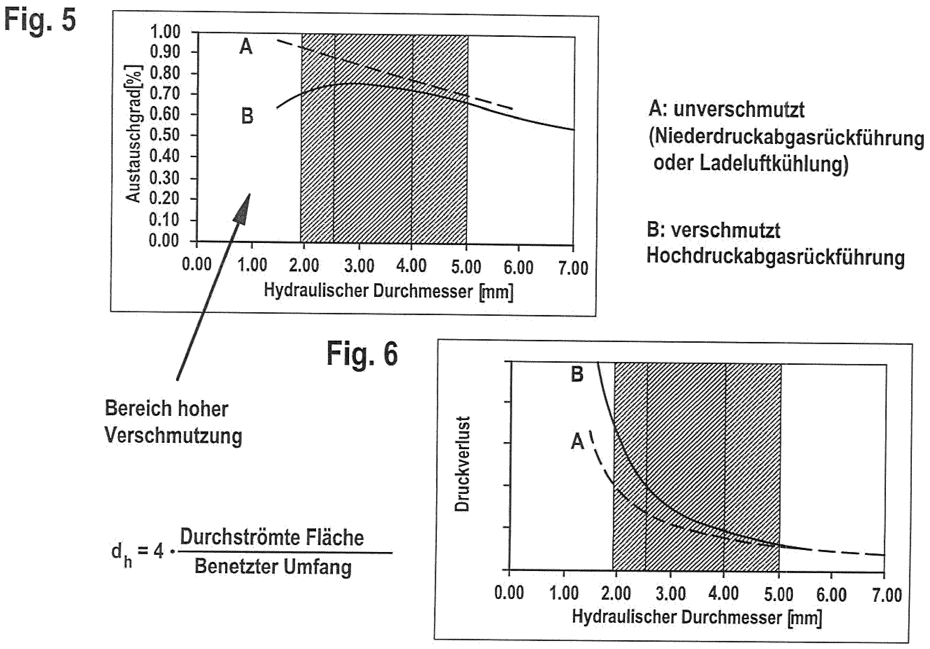

Als besonders bevorzugt zur Realisierung des Konzept der Erfindung hat sich ein hydraulischer Durchmesser in einem Bereich zwischen 2 mm und 5 mm erwiesen. Die Größe dieses Bereiches realisiert - wie anhand von Fig. 5, Fig. 6, Fig. 7 und Fig. 8 im Einzelnen erläutert - in besonders vorteilhafter Weise eine Abwägung zwischen der Tendenz einen möglichst guten Wärmeübergang bei einem Strömungskanal zu realisieren einerseits und der Tendenz andererseits einen Druckverlust zu reduzieren, bzw. einen akzeptablen Druckverlust bei gleichwohl gutem Wärmeübergang zu realisieren. In diesem Zusammenhang erweist sich ein hydraulischer Durchmesser im Bereich zwischen 3 mm und 3,4 mm, insbesondere zwischen 3,1 mm und 3,3 mm als weiter besonders bevorzugt. Es hat sich insbesondere in Bezug auf den letztgenannten Bereich eines hydraulischen Durchmessers zwischen 3,1 mm und 3,3 mm gezeigt, dass ein hydraulischer Durchmesser bei etwa 3,2 mm besonders zweckmäßig ist. Zwar lässt sich auch in dem genannten Bereich eine Verschmutzung des Strömungskanal, insbesondere des Wärmetauscherrohres, grundsätzlich nicht vermeiden, doch haben Versuche ergeben, dass sich in diesem Bereich eine Verschmutzung des Strömungskanals derart stabilisiert, dass auch eine Leistungsabnahme bei einem vergleichsweise geringen Niveau gehalten wird. Während in Bereichen des hydraulischen Durchmessers außerhalb der zuvor genannten Bereiche zu erwarten ist, dass ein Strömungskanal unter Zunahme des Druckverlustes zunehmend verschmutzt je länger er betrieben wird, ist bei den zuvor genannten, bevorzugten Bereichen eines hydraulischen Durchmessers nachgewiesener Maßen davon auszugehen, dass sich ein Druckverlust auf vergleichsweise niedrigem Niveau stabilisiert. Eine etwaige suboptimale Wärmeübertragungsleistung eines Wärmeüberträgers wird nicht weiter reduziert bei weiterem Betrieb des Wärmetauschers. Bei außerhalb der zuvor genannten Bereiche eines hydraulischen Durchmessers kommt es dagegen bei weiterem Betrieb des Strömungskanals zu einer überproportionalen Zunahme des Druckverlust und schließlich im schlimmsten Fall zu einer Verblockung des Strömungskanals.

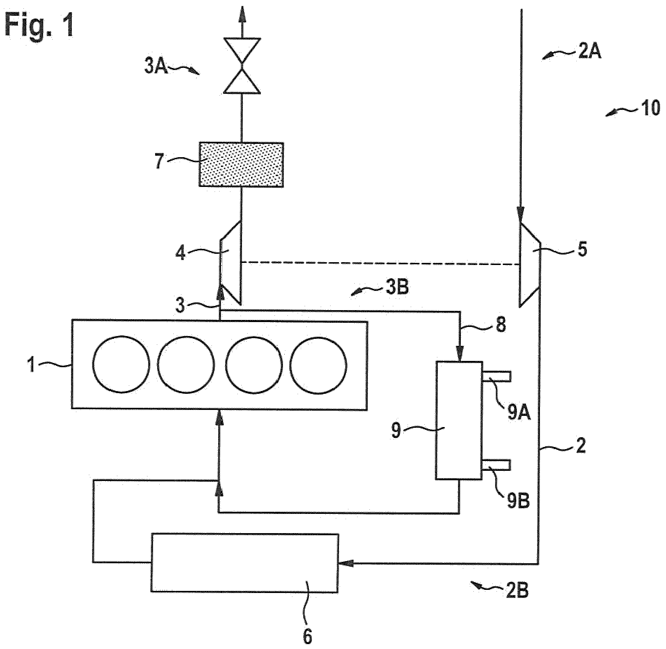

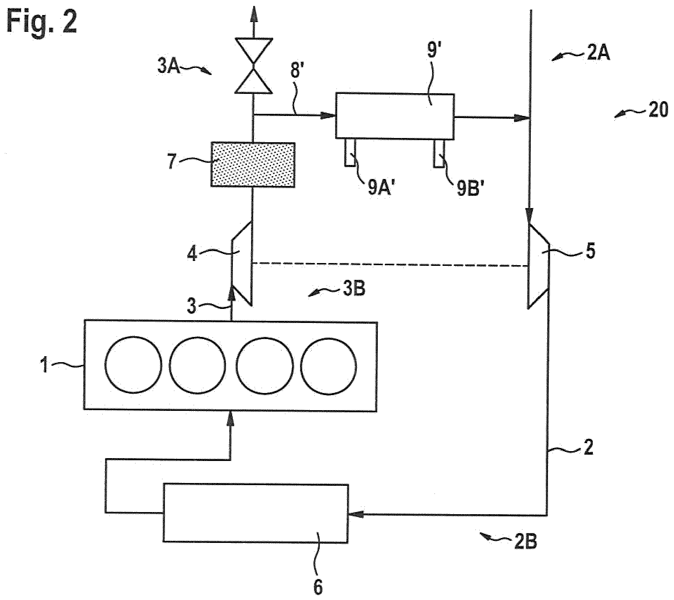

Ein Strömungskanal gemäß dem Konzept der Erfindung lässt sich sowohl im Rahmen einer in Bezug auf Fig. 1 näher erläuterten Hochdruck-Abgasrückführung als auch im Rahmen einer in Bezug auf Fig. 2 näher erläuterten Niederdruck-Abgasrückführung in vorteilhafter Weise einsetzen. Weiterhin ist auch eine Anwendung für eine Ladeluftkühlung möglich. Bei allen, insbesondere den genannten oder ähnlichen, Anwendungsbereichen wird eine Erhöhung der Anzahl von Stegen zur Verbesserung des Wärmeübertrags gemäß dem Konzept der Erfindung vermieden, indem der hydraulische Durchmesser in einem Bereich zwischen 1,5 mm und 6 mm gewählt wird. Allerdings hat sich in Versuchen gezeigt, dass eine im Hinblick auf eine Niederdruck-Abgasrückführung, Hochdruck-Abgasrückführung oder Ladeluftkühlung optimierte Wahl eines Bereichs für den hydraulischen Durchmesser unterschiedlich gestaltet werden kann. Bei der Hochdruck-Abgasrückführung ist, wie sich gezeigt hat, sowohl der Anstieg eines Druckverlustes als auch die zunehmende Gefahr eines Verblockens oder starken Verschmutzen eines Strömungskanals durch Rußpartikel oder dergleichen vergleichsweise kritisch. Für einen Hochdruckwärmetauscher hat sich ein Bereich eines hydraulischen Durchmessers zwischen 2,5 mm und 4 mm, insbesondere zwischen 2,8 mm und 3,8 mm als besonders vorteilhaft erwiesen.

Bei einem Niederdruck-Abgasrückführungskonzept erweist sich die Zunahme des Druckverlustes als besonders kritisch, da dieser im Rahmen einer Niederdruckanwendung bevorzugterweise besonders niedrig gehalten werden sollte. Für einen Niederdruckwärmetauscher hat sich ein Bereich eines hydraulischen Durchmessers zwischen 2 mm und 3,5 mm, insbesondere zwischen 2,5 mm und 3,5 mm als besonders vorteilhaft erwiesen.

Es hat sich als besonders vorteilhaft, insbesondere zur Erhöhung einer Korrosionsbeständigkeit, erwiesen ein Verhältnis aus einer Stegstärke und einer Kanalmantelstärke unterhalb des Wertes 1,0 zu wählen. Mit anderen Worten, zur Erhöhung der Korrosionsbeständigkeit ist es vorteilhaft den Kanalmantel mit einer stärkeren Wanddicke zu versehen als einen Steg. Dies ist insbesondere im Hinblick auf die Ausführung eines Strömungskanals vorteilhaft, bei der wenigstens der Kanalmantel auf einem Aluminiumwerkstoff basierend hergestellt ist.

Darüber hinaus hat es sich als grundsätzlich relevant erwiesen, eine Kanalmantelstärke derart zu optimieren, dass einerseits eine Korrosionsbeständigkeit, insbesondere im Falle eines auf einem Aluminiumwerkstoff basierenden Strömungskanals, in ausreichendem Maße gewährleistet ist und andererseits eine ausreichende Anzahl von Strömungskanäle in verfügbaren Bauraum eines Wärmetauschers bereitzustellen. In der Regel ist ein Bauraum für einen Wärmetauscher in einem Motor vergleichsweise begrenzt, sodass es grundsätzlich im Rahmen einer Verbesserung liegt, möglichst viele Strömungskanäle in einem Wärmetauscher zu Verfügung zu stellen und damit eine Kanalmantelstärke nicht zu dick auszugestalten. Gemäß einer besonders bevorzugten Weiterbildung der Erfindung hat sich ein Verhältnis aus dem hydraulischen Durchmesser und einer Kanalmantelstärke in einem Bereich zwischen 0,8 und 8 als besonders vorteilhaft erwiesen. Dieser Bereich hat sich, insbesondere bei einem auf einem Aluminiumwerkstoff basierenden Strömungskanal, insbesondere bei einem Strömungskanal bei dem wenigstens der Kanalmantel auf einem Aluminiumwerkstoff basiert, als besonders zweckmäßig erwiesen. Vorteilhaft ist auch ein Bereich zwischen 1,2 und 6,0, insbesondere ein Bereich zwischen 1,4 und 6 im Hinblick auf die Auslegung der Kanalmantelstärke (Bauraumbedarf, Korrosionsbeständigkeit) und des hydraulischen Durchmessers (Wärmeübergang, Druckverlust).

Das Konzept der Erfindung und/oder eine oder mehrere der zuvor genannten Weiterbildungen allein oder in Kombination erweist sich als besonders vorteilhaft für Abmessungen eines Strömungskanals, die ein Verhältnis aus dem durch das erste Fluid benetzbaren Umfang und einem äußeren Umfang des Strömungskanals in einem Bereich zwischen 0,1 und 0,5 realisieren. Die angestellten Untersuchungen zur Sache haben gezeigt, dass im Rahmen der genannten Abmessungen das Verhalten eines Strömungskanals im Hinblick auf die zuvor erläuterte Problematik besonders vorteilhaft ist.

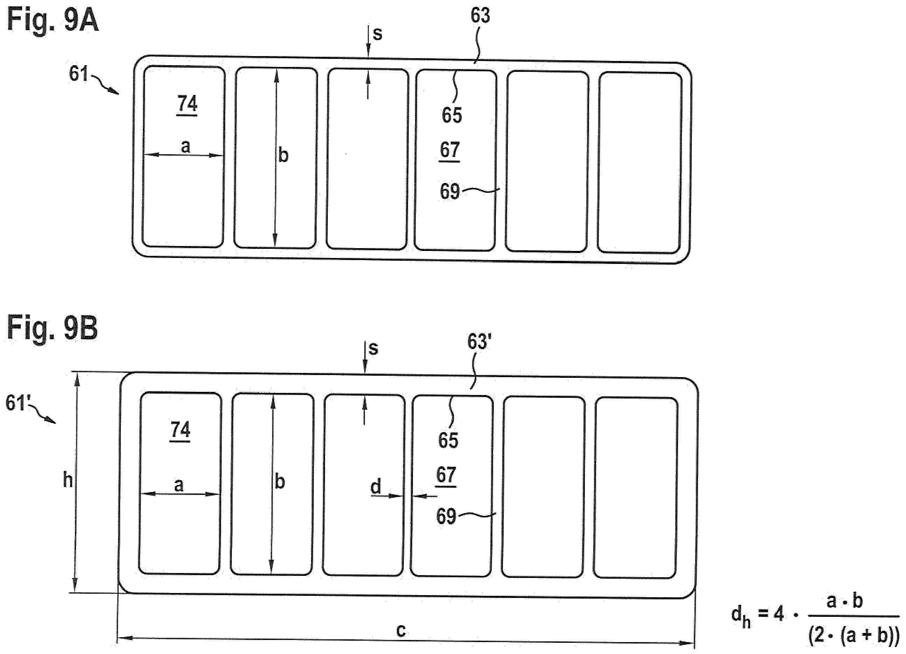

Grundsätzlich lässt sich ein Strömungskanal gemäß dem Konzept der Erfindung in vielfältiger Form realisieren, insbesondere bei einem Strangpressprofil. Besonders zweckmäßig hinsichtlich Herstellungsaspekten und der oben benannten Problematik erweist sich ein Strömungskanal, bei dem im Rohr-Querschnitt ein Steg als Ganzsteg einends und anderends an der Kanalmantelinnenseite angeordnet ist. Insbesondere kann ein Rohrquerschnitt ausschließlich Ganzstege aufweisen. Vorteilhaft ist ein Ganzsteg durchgehend, ohne Öffnungen, zwischen einer ersten Kanalmantelinnenseite und einer zweiten Kanalmantelinnenseite aus geführt. Wie beispielhaft an Fig. 9A und Fig. 9B erläutert, lässt sich dadurch ein Strömungskanal mit einem hydraulischen Durchmesser gemäß dem Konzept der Erfindung realisieren.

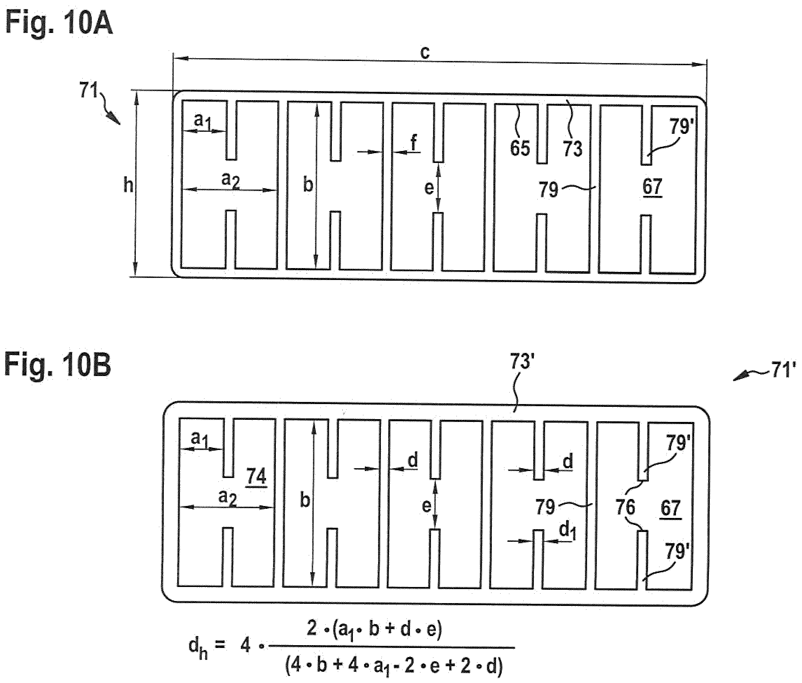

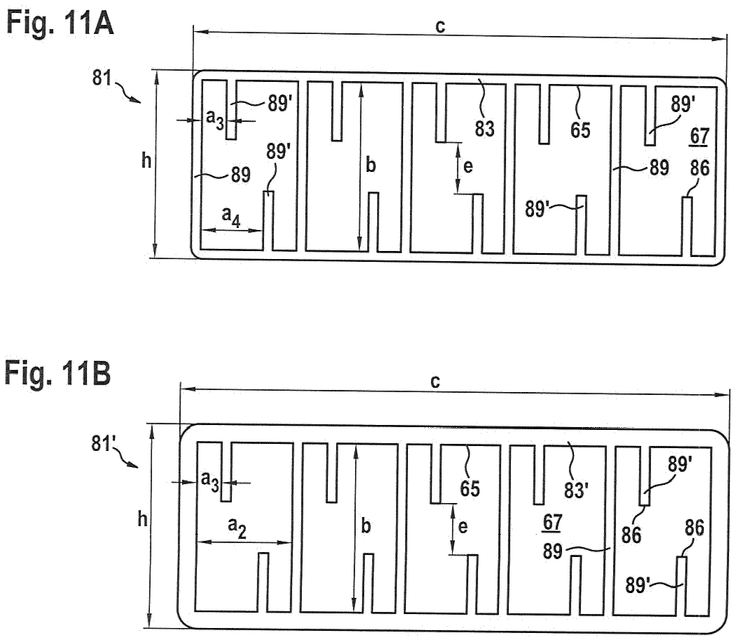

Darüber hinaus hat sich ein Strömungskanal als vorteilhaft erwiesen, bei dem im Rohr-Querschnitt ein Steg als Teilsteg nur einends an der Kanalinnenseite angeordnet ist und anderenends frei in den Innenraum ragt. Wie beispielhaft anhand von Fig. 10A und Fig. 10B sowie Fig. 11A und Fig. 11 B erläutert, lässt sich anhand eines stranggepressten Strömungskanals in besonders vorteilhafter Weise ein hydraulischer Durchmesser gemäß dem Konzept der Erfindung realisieren.

Es hat sich gezeigt, dass vorteilhaft zwei Teilstege mit sich andernends gegenüberliegenden Stirnseiten angeordnet sein können. Alternativ oder in Kombination mit der zuvor genannten Anordnung von Teilstegen können zwei Teilstege mit sich andernends seitlich gegeneinander versetzten Stirnseiten angeordnet sein. Vorzugsweise ist ein Teilsteg und ein Ganzsteg abwechselnd nebeneinander angeordnet.

Es hat sich als besonders vorteilhaft erwiesen, Abmessungen und Anordnungen der Teilstege wie folgt zu treffen. Gemäß einer besonders bevorzugten Weiterbildung liegt ein Verhältnis eines Abstands zwischen zwei Teilstehen, insbesondere zwei gegenüberliegenden Teilstegen und/oder zwei gegeneinander versetzten Teilstegen, zu einer Höhe des Rohr-Querschnitts in einem Bereich unterhalb von 0,8, vorzugsweise in einem Bereich von 0,3 und 0,7. Vorzugsweise ist ein Verhältnis eines Abstands eines ersten Teilstegs zu einem Ganzsteg zu einem Abstand eines zweiten Teilsteg zu dem Ganzsteg, in einem Bereich zwischen 0,5 und 0,9, vorzugsweise in einem Bereich zwischen 0,6 und 0,8.

Vorzugsweise ist der Kanalmantel, vorzugsweise der gesamte Strömungskanal, aus einem Werkstoff auf Aluminium-Basis.

Alternativ, zusätzlich oder in Kombination, kann es auch ein Werkstoff auf Stahl-Basis, vorzugsweise Edelstahl-Basis, sein.

Der Kanalmantel kann vorzugsweise als ein Rohr, insbesondere als ein geschweißtes und/oder gelötetes Rohr oder stranggepresstes Rohr gebildet sein. Ein Strömungskanal kann beispielsweise aus einem Blechband hergestellt sein, das zu einem Rohr geformt und dann längsgeschweißt oder gelötet ist. Weiterhin kann ein Strömungskanal auch durch miteinander verbundene Scheiben oder Platten ausgebildet werden. Insbesondere ist wenigstens der Kanalmantel, vorzugsweise der gesamte Strömungskanal als ein Strangpressprofil gebildet.

Im Fall von stranggepressten auf einem Aluminiumwerkstoff basierenden Strömungskanal hat sich gezeigt, dass dessen Korrosionseigenschaften vergleichsweise gut sind. Dies ist unter anderem auf eine dem Strömungskanal beim Strangpressen verliehene vergleichsweise kleine Kornstruktur und vergleichsweise glatte Oberflache zurückzuführen. Dies führt dazu, dass selbst sauren Abgaskondensaten eine für die Anforderungen moderner Wärmetauscherkonzepte hinreichende Korrosionsbeständigkeit entgegengesetzt wird.

Gemäß einer besonders bevorzugten ersten Weiterbildung der Erfindung ist von der Anzahl von Stegen wenigsten ein Steg, vorteilhaft alle Stege, ein mit dem Kanalmantel stranggepresster Steg.

Gemäß einer besonders bevorzugten zweiten Weiterbildung der Erfindung ist von der Anzahl von Stegen wenigstens ein Steg, vorzugsweise alle Stege, ein separat vom Profil hergestellter Steg und mit der Kanalinnenseite verbundener Steg. In bevorzugter Weise ist ein Steg weiter an- und/oder aus - und/oder umgeformt. Dies hat sich als besonders zweckmäßig erwiesen, um auch bei einem stranggepressten Steg weitere Maßnahmen zur Anbringung von Strömungsleitelementen oder turbulenzerzeugenden Elementen zu treffen. Vorzugsweise ist ein Steg parallel zu einer Strömungskanalachse verlaufend angeordnet. Grundsätzlich ist es jedoch auch möglich, entlang der Strömungskanalachse gewellt verlaufende Stege im Rahmen eines Strangpressvorgangs zu erzeugen. Vor allem im Hinblick auf die Ausführung eines Strangpressvorgangs erweist es sich als zweckmäßig einen Steg entlang einer Strömungskanalachse ununterbrochen auszuführen.

Insbesondere im Hinblick auf die zweite Weiterbildung der Erfindung kann ein Steg in den Kanalmantel eingebracht, insbesondere eingeschoben werden - beispielsweise wie dies in DE 37 316 69A1 offenbart ist. Vorzugsweise ist ein Steg gemäß der zweiten Weiterbildung stoffschlüssig mit der Kanalinnenseite verbunden. Insbesondere hat es sich als vorteilhaft erwiesen, einen Steg an der Kanalinnenseite anzulöten, anzuschweißen und/oder anzukleben. Ein separat vom Kanalmantel hergestellter Steg gemäß der zweiten Weiterbildung kann gewalzt, gestanzt und/oder gerollt sein.

Im Rahmen einer besonders bevorzugten Weiterbildung der Erfindung - insbesondere im Hinblick auf eine Weiterbildung bei der wenigsten der Kanalmantel, vorzugsweise der gesamte Strömungskanal basierend auf einem Aluminiumwerkstoff hergestellt ist - ist es möglich, wenigstens einen Steg und/oder den Kanalmantel, vorzugsweise die Kanalmantelinnenseite, mit einem Korrosionsschutz zu versehen. Ein Korrosionsschutz kann besonders vorteilhaft in Form einer Verzinkung und/oder eines Lacks bereitgestellt werden.

Der Kanalmantel kann grundsätzlich in beliebig angemessener Form gebildet sein. Besonders bevorzugt ist der Kanalmantel in Form eines Rohres, vorzugsweise stranggepressten Rohres, gebildet. Insbesondere Flachrohre haben sich bei modernen Ausführungen eines Wärmetauschers als zweckmäßig erwiesen. Auch eignet sich ein Kanalmantel in Form eines durch zwei aufeinander gefügten Scheiben gebildeten Rohres. Ein Rohrquerschnitt kann grundsätzlich in vielfach möglicher Form gewählt werden - als besonders vorteilhaft erwiest sich ein rechteckiger, ovaler oder halb-oval ausgebildeter Rohrquerschnitt.

Gemäß dem der zweiten Weiterbildung der Erfindung kann ein Steg als Teil eines Profils mit welligen, insbesondere rechteckwelligem oder trapezwelligem, Querschnitt gebildet sein. Die Ausbildung derartiger Profile ist besonders leicht möglich und erwiest sich darüber hinaus besonders vorteilhaft im Hinblick auf die Erhöhung des Wärmeübergangs.

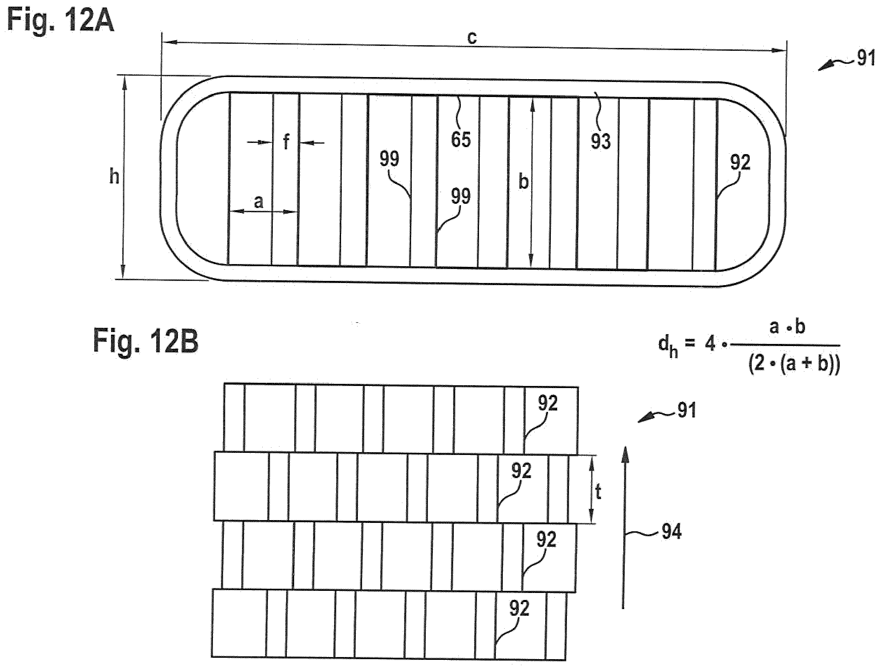

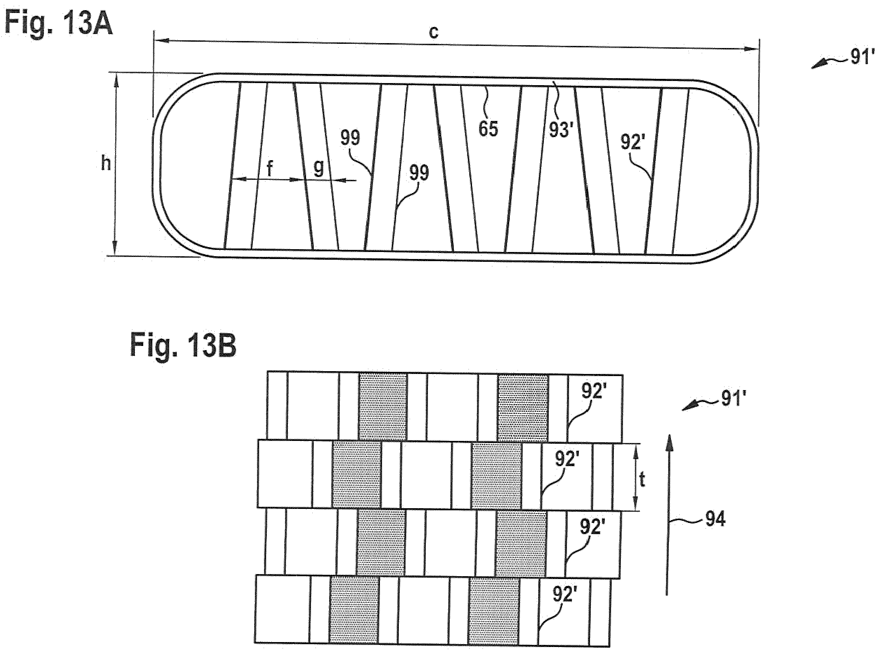

Gemäß der zweiten Weiterbildung der Erfindung kann vorzugsweise eine Anzahl von im Querschnitt von welligen Profilen entlang einer Strömungskanalachse hintereinander angeordnet sein - beispielhaft ist dies in Bezug auf Fig. 12A, Fig. 12B bzw. Fig. 13A, Fig. 13B erläutert.

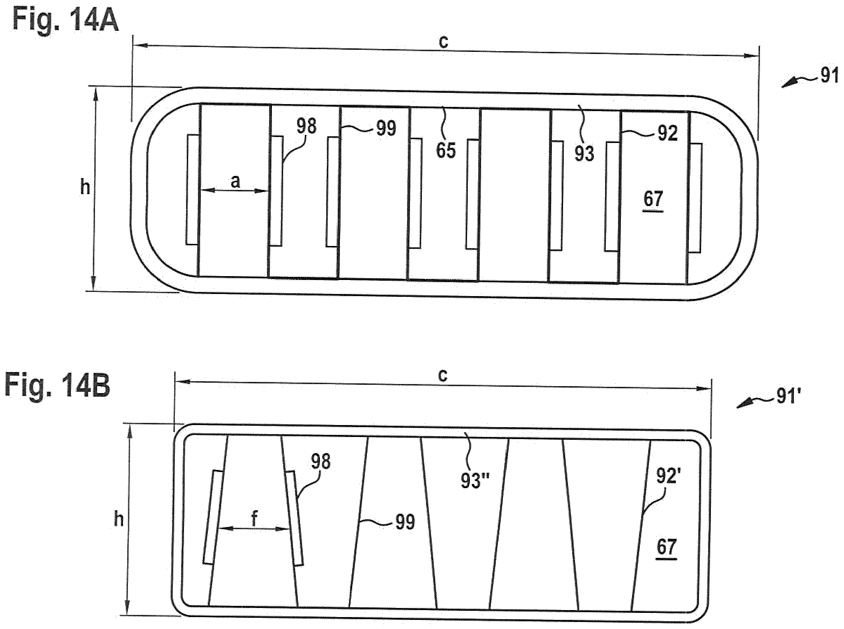

Grundsätzlich kann ein Steg Strömungsleitelemente und/oder turbulenzerzeugende Elemente unterschiedlichster Art aufweisen, wobei die Ausbildung und Wahl solcher Elemente je nach anzustrebendem Zweck und Verwendung des Strömungskanals ausgeführt werden kann. Als besonders vorteilhaft hat sich ein Strömungsleitelement und/oder ein Turbulenzelement erwiesen, das ausgewählt ist aus der Gruppe bestehend aus: einer Anzahl von Unterbrechungen und/oder Öffnungen entlang einer Strömungskanalachse, insbesondere als Ausstanzung, Ausbuchtung wie Kiemen oder dergleichen; eine Anzahl von Wellen, vorzugsweise in Strömungsrichtung; eine Anzahl von Stegöffnungen, die unter Bildung einer Stegrippe gegeneinander versetzt sind, insbesondere in Strömungsrichtung gegeneinander versetzt sind. Beispielhafte Möglichkeiten sind in Bezug auf Fig. 14A, Fig. 14B erläutert.

In einer besonders bevorzugten Weiterbildung gemäß dem Konzept der Erfindung ist eine Anzahl von Stegen zwischen 2 bis 20, insbesondere 5 bis 15, insbesondere 7 bis 12, insbesondere 8 bis 11, insbesondere 9 Stegen über einen RohrQuerschnitt verteilt nebeneinander angeordnet.

Betreffend den Wärmetauscher wird die Aufgabe durch die Erfindung mit einem Wärmetauscher der eingangs genanten Art gelöst, bei dem erfindungsgemäß vorgesehen ist, dass der Block eine Anzahl von Strömungskanälen gemäß dem Konzept der Erfindung aufweist, die von dem ersten Fluid durchströmbar sind und wobei der Fluidanschluss mit den Strömungskanälen strömungsverbunden ist. Vorzugsweise nimmt das Gehäuse die Strömungskanäle auf.

Das Blockabschlusselement ist vorzugsweise in Form eines Bodens mit einer oder mehrere Durchgangsöffnungen für die Strömungskanäle versehen.

Vorzugsweise kann jeweils ein separates in Bezug auf das erste Fluid eintrittsseitiges und ein austrittsseitiges Blockabschlusselement vorgesehen sein. Dies ist insbesondere der Fall bei einem Wärmetauscher in der so genannten I-Fluss-Ausführung. Dabei wird das erste Fluid auf einer ersten Seite dem Wärmetauscher zugeführt und auf einer anderen zweiten Seite abgeführt.

Zusätzlich oder alternativ kann ein Blockabschlusselement einen Eintrittsbereich und einen Austrittsbereich für das erste Fluid aufweisen. Dies betrifft insbesondere einen Wärmetauscher in der so genannten U-Fluss-Ausführung, bei dem das erste Fluid auf einer ersten Seite zugeführt wird und auf der gleichen Seite in unterschiedlicher Richtung abgeführt wird.

Ein Fluidanschluss kann in bevorzugter Weise in Form eines Diffusors, insbesondere eines Eintrittsdiffusors und/oder Austrittsdiffusors gebildet sein.

Die Erfindung führt auch auf ein Abgasrückführsystem für eine Brennkraftmaschine, aufweisend eine Abgasrückführung, einen Kompressor und erfindungsgemäß einen Wärmetauscher gemäß dem Konzept der Erfindung in Form eines Abgaswärmetauschers, insbesondere eines Abgaskühlers.

Grundsätzlich unterscheidet man bei der Abgasrückführung zwischen einer Hochdruckrückführung, wie sie in Bezug auf Fig. 1 beispielhaft näher erläutert ist, und einer Niederdruckrückführung, wie sie in Bezug auf Fig. 2 beispielhaft näher erläutert ist. Bei einer Hochdruckrückführung ist ein Abgaswärmetauscher auf einer Hochdruckseite, d.h. einer Ausgangsseite einer Brennkraftmaschine angeordnet. Bei einer Niederdruckrückführung ist ein Abgaswärmetauscher auf einer Niederdruckseite einer Brennkraftmaschine, d.h. insbesondere auf einer Eingangsseite einer Brennkraftmaschine vorgeschaltet angeordnet. In Bezug auf diese Möglichkeiten wird vor allem auf oben genannte unterschiedliche mögliche Gestaltung eines hydraulischen Durchmessers spezifisch für diese Möglichkeiten Bezug genommen.

Die Erfindung führt auch auf ein Ladeluftzuführsystem für eine Brennkraftmaschine, aufweisend eine Ladeluftansaugung, einen Luftfilter, einen Kompressor und erfindungsgemäß einen Wärmetauscher gemäß dem Konzept der Erfindung in Form eines Ladeluftwärmetauschers, insbesondere eines Ladeluftkühlers.

Die Erfindung führt auch auf eine Verwendung des Wärmetauschers gemäß dem Konzept der Erfindung für eine Brennkraftmaschine, insbesondere eines Dieselmotors, eines Kraftfahrzeugs, insbesondere eines Nutzfahrzeugs oder Personenkraftwagens.

Weiter führt die Erfindung auf eine Verwendung des Wärmetauschers gemäß dem Konzept der Erfindung für eine Brennkraftmaschine, insbesondere eines Otto-Motors, eines Kraftfahrzeugs, insbesondere eines Personenkraftwagens oder Nutzfahrzeugs.

Als besonders bevorzugt hat sich die Anwendung des Konzepts der Erfindung auf einen zweistufigen Wärmetauscher erwiesen. Grundsätzlich kann das zweite Fluid ein flüssiges Kühlmittel oder ein gasförmiges oder flüssig-gas-gemischtes Kühlmittel sein. In einer besonders bevorzugten Anwendung ist das Konzept der Erfindung realisierbar bei einem zweistufigen Wärmetauscher, der in der ersten Stufe mit einem flüssigen Kühlmittel gekühlt ist und in der zweiten Stufe mit einem gas- oder luftförmigen Kühlmittel gekühlt ist. Ein Strömungskanal gemäß dem Konzept der Erfindung kann in der ersten Stufe des Wärmetauschers allein oder in der zweiten Stufe des Wärmetauschers allein oder in beiden Stufen des Wärmetauschers eingesetzt werden und im Hinblick auf die für die Stufen charakteristischen Druck- und Temperaturbedingungen angepasst werden.

Vorteilhaft ist, dass wenigstens ein Steg weiter an- und/oder aus- und/oder umgeformt ist.

Vorteilhaft ist, dass wenigstens ein Steg parallel zu einer Strömungskanalachse verläuft.

Vorteilhaft ist, dass wenigstens ein Steg entlang einer Strömungskanalachse ununterbrochen ist.

Vorteilhaft ist, dass wenigstens ein Steg ein separat vom Kanalmantel hergestellter Steg und mit der Kanalinnenseite erbundener Steg ist.

Vorteilhaft ist, dass ein Steg in den Kanalmantel eingebracht, insbesondere eingeschoben ist.

Vorteilhaft ist, dass ein Steg stoffschlüssig mit der Kanalinnenseite verbunden ist, insbesondere ein Steg an der Kanalinnenseite angelötet, angeschweißt und/oder angeklebt ist.

Vorteilhaft ist, dass ein Steg gewalzt, gestanzt und/oder gerollt ist.

Vorteilhaft ist, dass wenigstens ein Steg und/oder der Kanalmantel, vorzugsweise die Kanalmantelinnenseite, einen Korrosionsschutz aufweist, vorzugsweise in Form einer Verzinkung und/oder eines Lacks.

Vorteilhaft ist, dass der Kanalmantel in Form eines Rohres, insbesondere Flachrohres gebildet ist.

Vorteilhaft ist, dass ein Rohr-Querschnitt rechteckig, oval oder halboval ausgebildet ist.

Vorteilhaft ist, dass ein Steg als Ganzsteg im Rohr-Querschnitt einends und andernends an der Kanalmantelinnenseite angeordnet ist, insbesondere durchgehend ist.

Vorteilhaft ist, dass ein Steg als Teilsteg im Rohr-Querschnitt nur einends an der Kanalinnenseite angeordnet ist und andernends frei in den Innenraum ragt.

Vorteilhaft ist, dass zwei Teilstege mit sich andernends gegenüberliegenden Stirnseiten angeordnet sind.

Vorteilhaft ist, dass zwei Teilstege mit sich andernends im Querschnitt seitlich gegeneinander versetzten Stirnseiten angeordnet sind.

Vorteilhaft ist, dass abwechselnd ein Teilsteg und ein Ganzsteg nebeneinander angeordnet sind.

Vorteilhaft ist, dass ein Steg als Teil eines Profils mit welligem, insbesondere rechteck-welligem oder trapez-welligem, Querschnitt gebildet ist.

Vorteilhaft ist, dass eine Anzahl von im Querschnitt welligen Profile entlang einer Strömungskanalachse hintereinander angeordnet sind.

Vorteilhaft ist, dass ein Steg Strömungsleitelemente und/oder Turbulenzelemente aufweist.

Vorteilhaft ist, dass Strömungsleitelemente und/oder Turbulenzelemente ausgewählt sind aus der Gruppe bestehend aus:
- einer Anzahl von Unterbrechungen und/oder Öffnungen entlang einer Strömungskanalachse, insbesondere als Ausstanzungen, Ausbuchtungen, wie Kiemen oder dergleichen;
- einer Anzahl von Wellen, vorzugsweise in Strömungsrichtung;
- einer Anzahl von Stegöffnungen, die unter Bildung einer Stegrippe gegeneinander versetzt sind, insbesondere in Strömungsrichtung gegeneinander versetzt sind.

Vorteilhaft ist, dass eine Anzahl von 2 bis 20, insbesondere 5 bis 15, insbesondere 7 bis 12, insbesondere 8 bis 11, insbesondere 9 Stegen über einen Rohr-Querschnitt nebeneinander angeordnet sind.

Vorteilhaft ist ein Wärmetauscher, insbesondere Abgas-Wärmetauscher oder Ladeluft-Wärmetauscher, zum Wärmetausch zwischen einem ersten

Fluid, insbesondere einem Abgas oder Abgas-Luft-Gemisch oder eine Ladeluft, und einem zweiten Fluid, insbesondere einem Kühlmittel, vorzugsweise einem flüssigen oder gasförmigen oder flüssig-gas-gemischten Kühlmittel,
aufweisend:
   - einen Block ur voneinander getrennten und wärmetauschenden Führung des ersten und zweiten Fluids, und
   - einen Fluidanschluss für das erste Fluid ;
welcher Block
ein Gehäuse mit einer von dem zweiten Fluid durchströmbaren Kammer, und
ein Blockabschlusselement zur, vorzugsweise fluiddichten, Trennung der Kammer und des Fluidanschlusses, aufweist;
dadurch kekennzeichnet, dass der Block eine Anzahl von Strömungskanälen aufweist, die von dem ersten Fluid durchströmbar sind und der Fluidanschluss mit den Strömungskanälen strömungsverbunden ist.

Vorteilhaft ist, dass das Blockabschlusselement, vorzugsweise in Form eines Bodens, mit einer oder mit mehreren Durchgangsöffnungen für die Strömungskanäle versehen ist.

Vorteilhaft ist, dass jeweils ein separates in Bezug auf das erste Fluid eintrittsseitiges und ein austrittsseitiges Blockabschlusselement (I-Fluss) und/oder ein Blockabschlusselement, das einen Eintrittsbereich und einen Austrittsbereich für das erste Fluid (U-Fluß) aufweist.

Vorteilhaft ist, dass der Fluidanschluss in Form eines Diffusors, insbesondere eines Eintrittsdiffusors und/oder Austrittsdiffusors, gebildet ist.

Vorteilhaft ist ein Abgasrückführsystem für eine Brennkraftmaschine, aufweisend eine Abgasrückführung, einen Kompressor und gekennzeichnet durch einen Wärmetauscher in Form eines Abgas-Wärmetauschers, insbesondere -Kühlers.

Vorteilhaft ist ein Ladeluftzuführsystem für eine Brennkraftmaschine, aufweisend eine Ladeluftansaugung, einen Luftfilter, einen Kompressor und gekennzeichnet durch einen Wärmetauscher in Form eines LadeluftWärmetauschers, insbesondere -Kühlers.

Vorteilhaft ist die Verwendung des Wärmetauschers für eine Brennkraftmaschine, insbesondere eines Dieselmotors.

Vorteilhaft ist die Verwendung des Wärmetauschers für eine Brennkraftmaschine, insbesondere eines Ottomotors.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Die Zeichnung zeigt in:
- Fig. 1:: ein Abgasrückführsystem für eine Brennkraftmaschine im Rahmen einer Hochdruckrückführung gemäß einer besonders bevorzugten Ausführungsform;
- Fig. 2:: ein Abgasrückführsystem für eine Brennkraftmaschine im Rahmen einer Niederdruckrückführung gemäß einer weiteren besonders bevorzugten Ausführungsform;
- Fig. 3:: einen Wärmetauscher in Form einer I-Fluss-Ausführung gemäß einer besonders bevorzugten Ausführungsform;
- Fig. 4:: einen Wärmetauscher in einer U-Fluss-Ausführung gemäß einer besonders bevorzugten Ausführungsform;
- Fig. 5:: eine auf Messungen und Rechnungen beruhende Darstellung der bevorzugten Wahl eines hydraulischen Durchmessers im Hinblick auf einen verbesserten Wärmeübergang bei einem Wärmetauscher;
- Fig. 6:: eine auf Messungen und Rechnungen beruhende Darstellung der bevorzugten Wahl eines hydraulischen Durchmessers im Hinblick auf einen möglichst reduzierten bzw. akzeptablen Druckverlust;
- Fig. 7:: eine auf Messungen beruhender Nachweis eines bevorzugten Bereichs eines hydraulischen Durchmessers, in dem eine Stabilisierung eines Druckverlusts bei einem bestimmten Niveau, selbst bei zunehmender Betriebszeit des Strömungskanals, zu erwarten ist;
- Fig. 8:: eine auf Messungen und Rechnungen beruhende Darstellung einer bevorzugten Wahl eines hydraulischen Durchmessers in Bezug auf das Verhältnis aus dem durch das erste Fluid benetzbaren Umfang und einem äußeren Umfang des Strömungskanals;
- Fig. 9A, Fig. 9B:: zwei Abwandlungen einer bevorzugten Ausführungsform eines Querschnitts eines Strömungskanals mit stranggepresstem Kanalmantel und mit dem Kanalmantel stranggepressten Stegen;
- Fig. 10A, Fig. 10B:: zwei Abwandlungen einer weiteren Ausführungsform wie in Fig. 9A und Fig. 9B mit Teilstegen;
- Fig. 11A, Fig. 11B:: zwei Abwandlungen einer weiteren Ausführungsform wie in Fig. 9A und Fig. 9B mit Teilstegen;
- Fig. 12A, Fig. 12B:: eine Querschnittsansicht und eine Draufsicht einer Ausführungsform, bei der die Stege separat vom Kanalmantel hergestellt und mit der Kanalmantelinnenseite verbunden sind;
- Fig. 13A, Fig. 13B: eine Abwandlung der Ausführungsform in Fig. 12A und Fig. 12B;
- Fig. 14A:: eine Abwandlung der Ausführungsform in Fig. 12A und Fig. 12B mit Kiemen als Strömungsleitelemente;
- Fig. 14B:: eine Abwandlung der Ausführungsform in Fig. 13A, Fig. 13B mit Kiemen als Strömungsleitelemente;

Fig. 1 zeigt ein Abgasrückführsystem 10 im Rahmen einer Hochdruckrückführung für eine Brennkraftmaschine 1, die vorliegend in Form eines Dieselmotors für ein nicht näher dargestelltes Kraftfahrzeug gebildet ist. Der Dieselmotor weist eine Ansaugleitung 2 und eine Abgasleitung 3 auf, wobei in der Abgasleitung 3 eine Abgasturbine 4 und in der Ansaugleitung 2 ein von der Abgasturbine 4 angetriebener Verdichter 5 (so genannter Abgasturbolader) angeordnet ist. Zwischen Verdichter 5 und dem nicht näher dargestellten Ansaugtrakt der Brennkraftmaschine 1 ist ein Ladeluftkühler 6 angeordnet, welcher durch ein nicht näher dargestelltes flüssiges Kühlmittel oder in einer anderen Ausführungsform auch alternativ oder zusätzlich durch Luft gekühlt werden kann. Stromabwärts von der Abgasturbine 4 ist eine als Partikelfilter und/oder Oxidationskatalysator ausgebildete Abgasreinigung 7 vorgesehen. Der stromabwärts der Abgasturbine 4 befindliche Bereich 3A mit symbolisch dargestelltem Drosselventil und der stromaufwärts vom Verdichter 5 befindliche Bereich 2A der Ansaugleitung 2 werden als Niederdruckseite bezeichnet. Über den Bereich 2A wird Frischluft angesaugt und über den Bereich 3A wird Abgas an die Frischluft abgegeben. Der stromabwärts vom Verdichter 5 befindliche Abschnitt 2B sowie der stromaufwärts der Abgasturbine 4 befindliche Bereich 3B wird als Hochdruckseite bezeichnet.

Vorliegend ist im Rahmen der in Fig. 1 dargestellten Hochdruckrückführung zwischen den Leitungsabschnitten der Bereiche 3B und 2B eine Abgasrückführleitung 8 sowie ein Abgaskühler 9 in Form eines Hochdruckabgaskühlers angeordnet. Der Hochdruckabgaskühler ist über zwei Stutzen 9A, 9B an einen nicht näher dargestellten Kühlmittelkreislauf der Brennkraftmaschine 1 anschließbar.

Die Funktion des dargestellten Abgasrückführsystem ist folgende:
Frischluft wird über die Niederdruckleitung des Bereichs 2A angesaugt, vom Verdichter 5 auf einen erhöhten Druck - den Ladedruck - gebracht, über die Ansaugleitung 2 dem Ladeluftkühler 6 zugeführt, dort zwecks Erhöhung des Wirkungsgrades gekühlt und der Brennkraftmaschine 1 zugeführt. Die die Brennkraftmaschine verlassenden Abgase treiben die Abgasturbine 4 in der Hochdruckleitung des Bereichs 3B an, die ihrerseits den Verdichter 5 antreibt. Hinter der Abgasturbine werden vorwiegend die Dieselabgase durch die Abgasreinigung 7 gereinigt und treten dann über den Bereich 3A ins Freie. Bei dem vorliegend gezeigten Konzept der Hochdruckrückführung wird ein Teilstrom der Abgase aus der Hochdruckleitung 3 im Bereich 3B über die Abgasrückführleitung 8 abgezweigt im Abgaskühler 9 gekühlt und der Ansaugleitung 2 im Hinblick auf den Hochdruckabschnitt 2B zugeführt, wo eine Vermischung der rückgeführten Abgase mit der angesaugten Frischluft erfolgt.

Fig. 2 zeigt eine weitere Ausführungsform eines Abgasrückführsystems, wiederum für eine Brennkraftmaschine 1 bei der vorliegend für zu Fig. 1 korrespondierende Teile gleiche Bezugszeichen benutzt sind. Bei dem in Fig. 2 dargestelltem Abgasrückführsystem 20 handelt es sich um ein Abgasrückführsystem 20 im Rahmen einer Niederdruckrückführung. Entsprechend ist zwischen den Niederdruckleitungsabschnitten der Bereiche 3A und 2A eine Abgasrückführleitung 8' sowie ein Abgaskühler 9' in Form eines Niederdruckabgaskühlers angeordnet, welcher wiederum über zwei Stutzen 9A' und 9B' an einen nicht näher dargestellten Kühlmittelkreislauf der Brennkraftmaschine 1 angeschlossen ist. Vorliegend ist die Leistung bzw. die Druckdifferenz am Verdichter 5 maßgebend für die über den Abgaskühler 9' rückgeführte Abgasmenge (Massenstrom) und kann somit beträchtlich gesteigert werden, bezogen auf ein in Fig. 1 dargestelltes Hochdruckabgasrückführungssystem auf der Hochdruckseite der Bereiche 3A, 3B, in denen nur die Druckdifferenz zwischen Motorabgasseite und Motoransaugseite für den Förderstrom zu Verfügung steht.

Sowohl in dem Ladeluftkühler 6 als auch im Abgaskühler 9, 9' können grundsätzlich Strömungskanäle gemäß dem Konzept der Erfindung - und insbesondere wie sie anhand von Fig. 9A bis Fig. 14B näher beschrieben sind - eingesetzt sein. Im vorliegenden Fall sind entsprechende Strömungskanäle lediglich im Abgaskühler 9, 9' angeordnet.

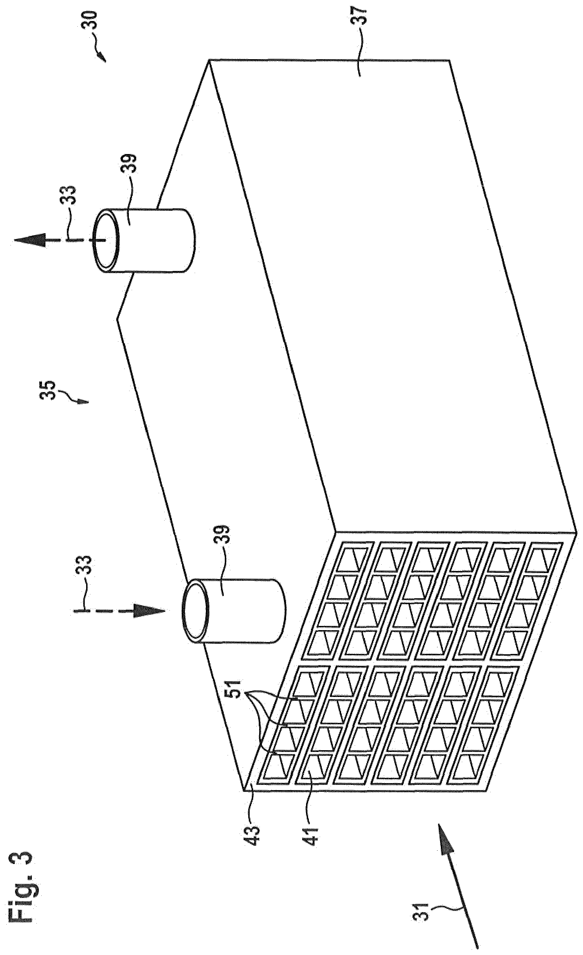

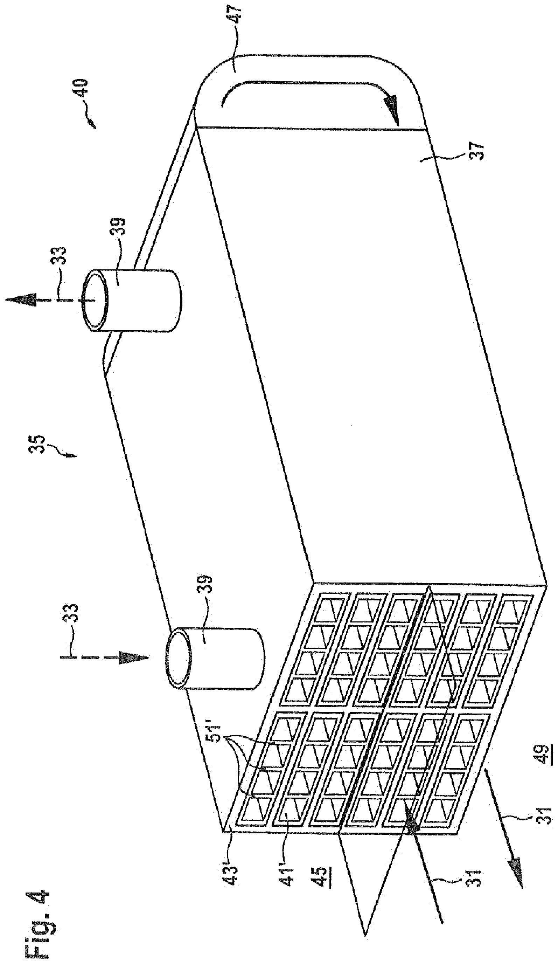

Bevorzugte Ausführungsformen eines solchen Abgaskühlers 9, 9' sind im Bezug auf die weiteren Fig. 3 und Fig. 4 näher beschrieben, wobei grundsätzlich jede weitere hier im Einzelnen nicht beschriebene Form eines Wärmetauschers zum Einsatz kommen kann. Insbesondere kann ein nicht näher dargestellter zweistufiger Wärmetauscher im Rahmen der Hochdruckrückführung, insbesondere ein in der ersten Stufe mit einem flüssigen Kühlmittel und in einer zweiten Stufe mit Luft gekühlter Wärmetauscher in Form eines Abgaskühlers.

Grundsätzlich tritt bei beiden Abgasrückführsystemen 10, 20 der Fig. 1 und Fig. 2 das Problem auf, dass eine Leistungssteigerung durch eine deutliche Erhöhung einer Anzahl von Stegen in einen Strömungskanal eines Wärmetauschers 9, 9' erreicht werden könnte, was jedoch zu Lasten eines akzeptablen Druckverlusts ginge und ein erhöhtes Verblockungsrisiko zur Folge hätte.

Insbesondere würde bei dem in Fig. 2 dargestellten Wärmetauscher in Form des Abgaskühlers 9', im Rahmen der Niederdruck-Abgasrückführung eine Erhöhung der Stegdichte in einem Strömungskanal äußerst kritisch sein, da der Druckverlust bei dem in Fig. 2 dargestellten Abgasrückführsystem 20 vergleichsweise gering gehalten werden sollte. Bei einem Abgaskühler 9' im Rahmen der Niederdruck-Abgasrückführung - als auch bei der Ladeluftkühlung - besteht im Vergleich zur Hochdruck-Abgasrückführung zwar kein Verschmutzungsproblem, aber hier bedeutet ein Druckverlustanstieg einen vergleichsweise stark erhöhten Kraftstoffverbrauch des Motors.

Bei dem in Fig. 1 dargestellten Abgaskühler 9 im Rahmen der Hochdruck-Abgasrückführung des Abgasrückführsystems 10 ist mit der Erhöhung der Anzahl der Stege sowohl ein kritischer Anstieg eines Druckverlustes auch die zunehmende Gefahr eines Verblockens oder starken Verschmutzens durch Rußpartikel verbunden.

Fig. 3 zeigt eine besonders bevorzugte Ausführungsform eines Wärmetauscher 30, vorliegend in der I-Fluss-Ausführung, der beispielsweise in einem Abgasrückführsystem 10, 20 der Fig. 1, Fig. 2 als Abgaskühler 9,9' eingesetzt werden kann. Der Wärmetauscher 30 ist vorliegend in Form eines Abgaswärmetauschers zum Wärmetausch zwischen einem ersten Fluid 31 in Form eines Abgases und einem zweiten Fluid 33 in Form eines flüssigen Kühlmittels ausgelegt. Der Wärmetauscher 30 weist einen Block 35 auf, der zur voneinander getrennten und wärmetauschenden Führung des Abgases und des flüssigen Kühlmittels aufgelegt ist und einen nicht näher dargestellten Fluidanschluss für das Abgas aufweist. Der Block 35 hat ein Gehäuse 37 mit einer von dem flüssigen Kühlmittel durchströmbaren Kammer, welche vorliegend nicht näher dargestellt ist. Das flüssige Kühlmittel 33 wird über Kühlmittelanschlüsse 39 zugeführt bzw. abgeführt wie dies durch die Pfeilrichtungen in Fig. 3 angedeutet ist. Der Block 35 weist eine Anzahl von Strömungskanäle 41 auf, die von dem Abgas 31 durchströmbar sind, wobei der nicht näher dargestellte Fluidanschluss mit den Strömungskanälen 41 strömungsverbunden ist. Die Strömungskanäle 41 sind im Gehäuse 37 aufgenommen und in einem Blockabschlusselement 43 angeordnet, das vorliegend flanschförmig ausgeführt mit mehreren Durchgangsöffnungen für die Strömungskanäle 41 versehen ist. Das Blockabschlusselement 43 dient zur fluiddichten Trennung der nicht näher dargestellten Kammer und des nicht näher dargestellten Fluidanschlusses. In Funktion umspült das flüssige Kühlmittel 33 in der Kammer die Strömungskanäle 41 und kühlt somit das in den Strömungskanälen 41 strömende Abgas.

Eine weitere Ausführungsform eines Wärmetauschers 40, in der so genannten U-Fluss-Bauweise, ist in Fig. 4 dargestellt, wobei identische Teile oder Teile gleicher Funktion zu Fig. 3 mit gleichen Bezugszeichen versehen sind.

Der in U-Fluss-Bauweise gebildete Wärmetauscher 40 in Form eine Abgaskühlers weist einen am Gehäuse 37 angebrachten einem ersten Strömungspfad 45 nachgeordneten Umlenkbereich 47 und einen dem Umlenkbereich 47 nachgeordneten zweiten Strömungspfad 49 auf. Die Strömungskanäle 41' des ersten Strömungspfads 45 und im zweiten Strömungspfad 49 sind im Umlenkbereich 47 als durchgehende, voneinander separierte Strömungskanäle 41' fortgesetzt, was den hier in Fig. 4 dargestellten Abgaswärmetauscher 40 in U-Fluss-Bauweise vom üblichen Wärmetauschern unterscheidet. Bei letzteren erfolgt nämlich eine nicht separierte Zusammenführung des Abgases 31 aus allen Strömungskanäle 41' im Umlenkbereich 47.

Die vorliegende in Form eines Flachrohres mit drei Stegen 51, 51' als Strangpressprofil auf Basis eines Aluminiumwerkstoff gebildeten Strömungskanäle 41, 41' werden unter Bezug auf die weiteren Figuren näher beschrieben und sind vorliegend schematisch dargestellt.

Fig. 5 zeigt ein Verhalten eines Wärmeübergangs bzw. Austauschgrads und damit das exemplarische Verhalten einer Wärmeübertragungsleistung eines Wärmetauschers anhand einer an Messdaten orientierten Rechnung für ein Beispiel eines als Abgaskühler ausgebildeten Wärmetauschers 30, 40, wie er beispielhaft in Fig. 3 und Fig. 4 gezeigt ist. Die Daten sind für typische Eintrittsbedingungen angegeben, wobei zur Vereinfachung ein Abgasdruck im Bereich von 1 bar gewählt worden ist. Die Ergebnisse sind jedoch exemplarisch auch für andere Abgasdrücke. Eine Kurve A zeigt das Verhalten eines Wärmetauschers im unverschmutzten Zustand, eine Kurve B das Verhalten eines Wärmetauschers im verschmutzten Zustand. Fig. 5 stellt den Austauschgrad in Abhängigkeit des hydraulischen Durchmessers dar. Fig. 6 stellt das Verhalten eines Druckverluste in Abhängigkeit des hydraulischen Durchmessers dar.

Wie anhand von Kurve A in Fig. 5 zu erkennen ist, nimmt der für die Wärmetauscherleistung maßgebliche Austauschgrad/Wärmeübergang mit abnehmendem hydraulischen Durchmesser weiter zu für den Fall, dass der Wärmetauscher unverschmutzt ist. Unterhalb eines hydraulischen Durchmessers von 6 mm befindet sich der Austauschgrad in einem akzeptablen Bereich. Wie anhand von Kurve B in Fig. 5 zu erkennen ist, nimmt der Austauschgrad unterhalb eines bestimmten hydraulischen Durchmessers in nicht akzeptabler Weise wieder ab für den Fall, dass der Wärmetauscher verschmutzt ist. Eine solche Untergrenze eines hydraulischen Durchmesser liegt bei 1,5 mm. Das Konzept der Erfindung sieht somit vor, dass ein Strömungskanal gekennzeichnet ist durch einen als das vierfache des Verhältnisses aus der Fläche des durchströmbaren Querschnitts zu einem durch das Abgas benetzbaren Umfang gebildeten hydraulischen Durchmessers, der in einem Bereich zwischen 1,5 mm und 6 mm liegt. Gleiches wird durch den in Fig. 6 näher dargestellten Druckverlust vorgegeben, welcher unterhalb eines hydraulischen Durchmessers von 6 mm in einen akzeptablen Bereich gelangt, aber unterhalb eines hydraulischen Durchmessers von 1,5 mm nicht mehr akzeptabel ist. Des weiteren ist aus den unterschiedlich schraffierten Bereichen von Fig. 5 und Fig. 6 ersichtlich, dass in bevorzugter Weise ein hydraulischer Durchmesser in einem Bereich zwischen 2 mm und 5 mm liegen sollte. Wie der dunkel schraffierte Bereich zeigt, liegt das vergleichsweise flach verlaufende obere Niveau eines Austauschgrads bei einem verschmutzten Wärmetauscher im bevorzugten Bereich eines hydraulischen Durchmessers zwischen 2,5 und 3,5 mm bzw. 2,8 mm und 3,8 mm, wobei letzterer Bereich vor allem für einen Hochdruckwärmetauscher relevant ist. Es hat sich nämlich gezeigt, dass der Verschmutzungsgrad bei einem Niedertemperaturwärmetauscher aufgrund des in Fig. 2 dargestellten, vorgeschalteten Abgasreinigers 7 vor dem Wärmetauscher in Form des Abgaskühlers 9' weniger relevant ist als bei einem in Fig. 1 näher dargestellten Hochdruckwärmetauscher in Form des Abgaskühlers 9, der üblicherweise höheren Partikel- und Verschmutzungsbelastungen ausgesetzt ist, als ein Niedertemperaturwärmetauscher. Gleichwohl ist für einen Niedertemperaturwärmetauscher ebenso wie für einen Hochdrucktemperaturwärmetauscher ein Druckverlust wie er in Fig. 6 dargestellt ist, relevant.

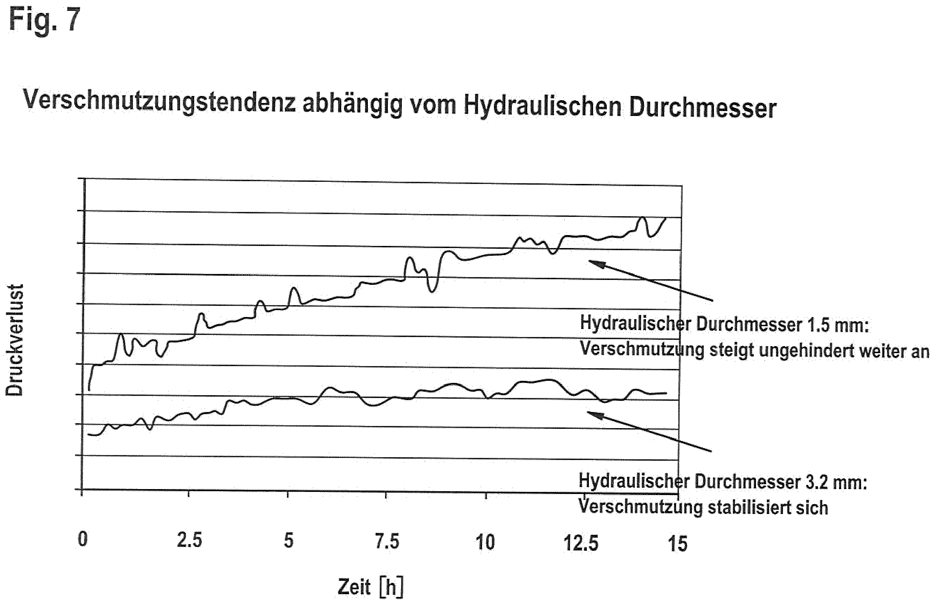

Aus der oberen Kurve in Fig. 7 ist ersichtlich, dass ein Druckverlust - vorliegend dargestellt anhand eines Druckverlusts für einen Strömungskanal mit grenzwertigem hydraulischen Durchmesser von 1,5 mm - mit zunehmender Verschmutzung - angegebenen als Betriebszeit in Stunden - weiter ansteigt. Dagegen hat sich gezeigt, dass bei Wahl eines hydraulischen Durchmessers von 3,2 mm - dies ebenso bei Wahl eines hydraulischen Durchmessers im Bereich zwischen 3,0 mm und 3,4 mm, bevorzugt zwischen 3,1 mm und 3,3 mm - selbst bei zunehmender Betriebszeit sich offenbar der Verschmutzungsgrad stabilisiert, so dass sich ein Druckverlust auf einem akzeptablen Niveau stabilisiert.

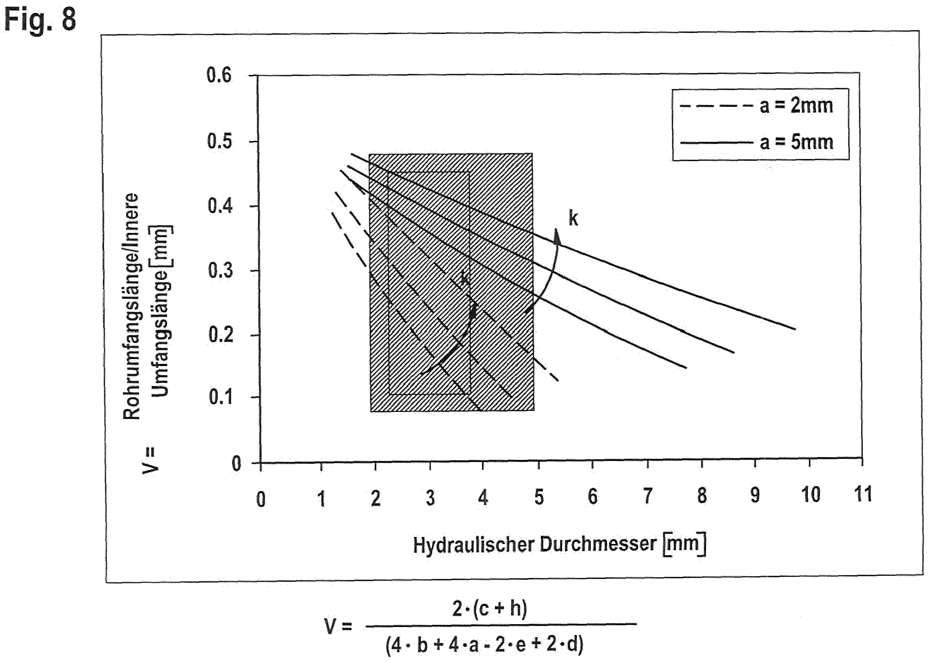

Fig. 8 stellt das Verhältnis aus dem durch ein Abgas benetzbaren Umfang und einem äußeren Umfang des Strömungskanal in Abhängigkeit des hydraulischen Durchmessers dar. Ein bevorzugtes Verhältnis ergibt sich aus den zuvor erläuterten schraffierten Bereichen eines bevorzugten hydraulischen Durchmessers von 2 mm bis 5 mm, insbesondere 2,8 mm bis 3,8 mm. Aus Fig. 8 ist ersichtlich, dass das genannte Verhältnis im Bereich zwischen 0,1 und 0,5 liegen sollte, um die anhand von Fig. 5 und Fig. 6 näher erläuterten verbesserten Austauschgrade und Druckverlustgrade zu erreichen. Fig. 8 ist vorliegend exemplarisch für ein in Fig. 10B näher bezeichnetes Profil eines Strömungskanals beispielhaft angegeben. Eine vergleichbare Tendenz ist auch bei den weiteren im Folgenden näher beschriebenen konstruktiven Ausführungen eines durchströmbaren Querschnitts bei einem Strömungskanal feststellbar. So zeig Fig. 8 das erläuterte Verhältnis für verschiedene Stegabstände a, u.a. der Fig. 10B, (vorliegende für zwei Beispiele a = 2 mm und a = 5 mm) und für unterschiedliche Werte eines Verhältnisses eines Abstands zwischen zwei gegenüberliegenden Teilstegen zu einer Höhe des Rohrquerschnitts, das vorliegend mit k bezeichnet ist. Das Verhältnis k sollte wie in Fig. 8 durch Pfeile dargestellt, in einem Bereich unterhalb von 0,8 mm, vorzugsweise in einem Bereich zwischen 0,3 mm und 0,7 mm liegen. Vorliegend nimmt das Verhältnis k eines Abstands e zwischen zwei gegenüberliegenden Teilstegen zu einer Höhe b des Rohrquerschnitts von 0,25 auf 0,75 in Pfeilrichtung zu. Diese Analyse gilt sowohl für einen in Fig. 1 exemplarisch dargestellten Abgaskühler 9 im Rahmen einer Hochdruckauslegung bei einem Abgasrückführsystem 10 als auch für einen in Fig. 2 exemplarisch dargestellten Abgaskühler 9' im Rahmen einer Niederdruckauslegung bei einem Abgasrückführsystem 20.

Im Folgenden werden Fig. 9A bis Fig. 14B beispielhafte konstruktive Ausführungen eines Querschnitts unterschiedlicher bevorzugter Strömungskanäle beschrieben. Dabei sollte gleichwohl klar sein, dass Abwandlungen derselben sowie eine beliebige Kombination von Merkmalen der konkret in den Figuren beschriebenen Ausführungsformen möglich sind und dennoch ein hydraulischer Durchmesser im Bereich zwischen 1,5 mm und 6 mm, bevorzugt zwischen 2 mm und 5 mm, bevorzugt zwischen 2,8 mm und 3,8 mm erreicht werden kann. Insbesondere ist bei den in den folgenden Figuren gezeigten Ausführungsformen jeweils eine Abwandlung gezeigt, bei der eine Kanalmantelstärke und einer Stegstärke d gleich bzw. ähnlich ist und eine weitere Abwandlung gezeigt, bei der ein Verhältnis aus einer Stegstärke d und einer Kanalmantelstärke s unterhalb von 1.0 mm liegt. Entsprechend lassen sich auch die Wandstärken von Teilstegen oder ähnliche Abmessungen, je nach zu erreichendem Zweck, variieren und anpassen.

Insbesondere zeigen die folgenden maßstabgerechten Figuren Ausführungsformen von Strömungskanäle, wie sie in einem in Fig. 1 und Fig. 2 beispielhaft dargestellten Abgasrückführsystem oder in einem Fig. 3 und Fig. 4 beispielhaft dargestellten Wärmetauscher eingesetzt werden können, beispielsweise anstatt der Strömungskanäle 41 beim Wärmetauscher 30 oder anstatt der Strömungskanäle 41' beim Abgaswärmetauscher 40. Insbesondere erfüllen die nachfolgend erläuterten Strömungskanäle allesamt die in Bezug auf Fig. 5 bis Fig. 8 erläuterten Voraussetzungen eines hydraulischen Durchmessers gemäß dem Konzept der Erfindung.

Fig. 9A und Fig. 9B zeigen zwei Abwandlungen eines Strömungskanals 61, 61', wobei sich die Abwandlungen darin unterscheiden, dass die Mantelstärke s bei dem in Fig. 9B dargestellten Strömungskanal 61' dicker als eine Stegstärke d ist, während diese bei dem in Fig. 9A dargestellten Strömungskanal 61 im wesentlichen gleich sind. Darüber hinaus sind für gleiche Merkmale gleiche Bezugszeichen genutzt.

Der Strömungskanal 61, 61' ist als ein insgesamt stranggepresstes Profil, also als ein stranggepresster Kanalmantel zusammen mit den stranggepressten Stegen gebildet. Der Strömungskanal 61, 61' weist dementsprechend einen Kanalmantel 63 mit einem von einer Kanalmantelinnenseite 65 umgebenen Innenraum 67 auf, der vorliegend zur wärmeaustauschenden Führung des ersten Fluids in Form eines Abgases ausgebildet ist. Weiter weist der Strömungskanal 61, 61' vorliegend eine Anzahl von fünf im Innenraum 67 an der Kanalmantelinnenseite 65 angeordneten Stegen 69 auf, die zusammen mit dem Kanalmantel 63, 63' als integrales stranggepresstes Profil gebildet sind. Ein Steg 69 verläuft gänzlich parallel zu einer senkrecht zur Zeichenebene stehenden Strömungskanalachse ununterbrochen entlang des im Gehäuse 37 eines Wärmetauschers 30, 40 der Fig. 3, Fig. 4 gebildten Strömungspfades. Der gezeigte durchströmbare Querschnitt quer zur Strömungskanalachse ist zur Führung des Abgases im Innenraum 67 ausgelegt. Die Auslegung erfolgt anhand des hydraulischen Durchmessers dₕ, der für das vorliegende Strömungskanalprofil 61, 61' unter Bezugnahme auf die Abstände a, b rechts unten in Fig. 9B angegeben ist. Der hydraulische Durchmesser ergibt sich als das Vierfache des Verhältnisses aus der Fläche des durchströmbaren Querschnitts zu einem durch das Abgas benetzbaren Umfang. Die Fläche des durchströmbaren Querschnitts ist vorliegend ein Vielfaches des Produkts aus a und b. Der benetzbare Umfang ist vorliegend das ebenfalls Vielfache der doppelten Summe aus a und b. a gibt dabei die Breite des freien Querschnitts einer im Strömungskanal durch die Stege 69 unterteilten Strömungslinie 74 an und b gibt vorliegend die freie Höhe der Strömungslinie 74 an.

Bei diesem Strömungskanal 63, 63' als auch bei den folgenden näher erläuterten Strömungskanälen liegt eine Wandstärke s im Bereich zwischen 0,2 mm und 2 mm, vorzugsweise im Bereich zwischen 0,8 mm und 1,4 mm. Eine Höhe b eines Strömungsfadens 74 bzw. eine Höhe des Innenraums 67 liegt vorliegend im Bereich zwischen 2,5 mm und 10 mm, vorzugsweise im Bereich zwischen 4,5 mm und 7,5 mm. Eine Breite a eines Strömungsfadens 74 liegt im Bereich zwischen 3 mm und 10 mm, vorzugsweise im Bereich zwischen 4 mm und 6 mm.

Fig. 10A und Fig. 10B zeigen zwei weitere Abwandlungen einer besonders bevorzugten Ausführungsform eines Strömungskanals 71, 71', die sich - wie zuvor erläutert - lediglich in der Wandstärke des Kanalmantels 73, 73' relativ zur Wandstärke eines Stegs 79 unterscheiden. Der Strömungskanal 71, 71' weist außerdem die Stege 79 in Form von Ganzstegen auf und daneben abwechselnd zu den Ganzstegen 79 angeordnete Teilstege 79'. Der Strömungskanal 71, 71' ist wiederum gänzlich als stranggepresstes Profil gebildet, wobei ein Stromfaden 74 wiederum durch den Abstand zweier Ganzstege 79 gebildet ist. Der hydraulische Durchmesser des durchströmbaren Querschnitts bei den in Fig. 10A und Fig. 10B gezeigten Strömungskanälen 71, 71' ist unterhalb von Fig. 10B angegeben. Vorliegend sind jeweils zwei Teilstege 79' mit sich gegenüberliegenden Stirnseiten 76 angeordnet.

In Fig. 11A und Fig. 11B sind zwei weitere Abwandlungen 81, 81' einer besonders bevorzugten Ausführungsform eines Strömungskanals 81, 81' gezeigt, bei denen zwei Teilstege 89' mit sich seitlich gegeneinander versetzten Stirnseiten 86 angeordnet sind. Ein hydraulischer Durchmesser dₕ für das gezeigte Profil ergibt sich wiederum aus der unterhalb von Fig. 10B gezeigten Formel, wobei a₁ durch a₄ zu ersetzen ist.

Ein Verhältnis eines Abstands a₃ eines ersten Teilstegs 89' zu einem Ganzsteg 89 zu einem Abstand a₄ eines zweiten Teilstegs 89' zu dem Ganzsteg 89 liegt in einem Bereich zwischen 0,5 mm und 0,9 mm, vorzugsweise in einem Bereich zwischen 0,6 mm und 0,8 mm. Grundsätzlich beträgt der Abstand e zwischen zwei gegenüberliegenden Teilstegen 79' und/oder zwischen zwei gegeneinander versetzten Teilstegen 89' zu einer Höhe b des Rohrquerschnitts in einem Bereich unterhalb von 0,8 mm, insbesondere in einem Bereich zwischen 0,3 mm und 0,7 mm.

Während die zuvor gezeigten Strömungskanäle mit einem stranggepressten Kanalmantel und zusammen mit diesem integral stranggepressten Stegen gebildet sind, ergeben sich die in Fig. 12A bis Fig. 14B gezeigten Strömungskanäle als ein stranggepresster Kanalmantel 93, 93' mit einer Anzahl von Stegen 99, die separat vom Kanalmantel 93, 93' hergestellt und mit der Kanalinnenseite verbunden sind. Dazu wird ein anhand der Fig. 12B bis Fig. 14B dargestelltes Profil 92, 92' mit welligem Querschnitt gebildet und in den Kanalmantel 93, 93' eingebracht - im vorliegenden Fall eingeschoben. Danach wird das Profil 92, 92' stoffschlüssig mit der Kanalinnenseite 65 verbunden. Die stoffschlüssige Verbindung erfolgt vorliegend durch Anlöten des Profils 92, 92' an der Kanalinnenseite 65.

Dazu zeigt Fig. 12A im Querschnitt und Fig. 12B in einem Draufsichtausschnitt einen Strömungskanal 91 mit einem rechteckwelligen Profil 92 oder trapezwelligem Profil 92', das jeweils in einen Kanalmantel 93, wie in Fig. 12A gezeigt, bzw. in einen Kanalmantel 93', wie in Fig. 13A gezeigt, eingeschoben ist.

Wie jeweils in der Draufsicht von Fig. 12B bzw. Fig. 13B zu erkennen ist, ist eine Anzahl solcher im Querschnitt welliger Profile 92, 92' entlang einer Strömungskanalachse 94 jeweils in einer Länge t und hintereinander angeordnet. Dabei sind die welligen Profile 92, 92' um einen kleinen Abstand gegeneinander versetzt, sodass ein im Strömungskanal entlang der Strömungskanalachse 94 strömendes Abgas jeweils abwechselnd auf die Vorderkanten von hintereinander angeordneten welligen Profilen 92, 92' trifft. Eine Versatzbreite f der hintereinander angeordneten Profile 92, 92' gegeneinander liegt im Bereich zwischen 0,1 mm und 08, mm, vorzugsweise im Bereich zwischen 0,3 mm und 0,6 mm.

Eine so erzeugte moderate Turbulenz erhöht den Wärmeübergang bei einem Strömungskanal 91, 91' ohne den Druckverlust inakzeptabel zu erhöhen. Ein Wert für einen hydraulischen Durchmesser dₕ ist für beide Strömungskanäle 91, 91' der Fig. 12A, Fig. 12B und Fig. 13A, Fig. 13B unterhalb von Fig. 12A angegeben.

Fig. 14A und Fig. 14B zeigen jeweils eine Abwandlung eines Strömungskanals 91 mit rechteckwelligem Profil 92 bzw. eines Strömungskanals 91' mit trapezwelligem Profil 92', wobei die Profile 92, 92' in abgewandelter Form zusätzlich mit einer eingelöteten Kiemenrippe 98 versehen sind. Dadurch wird wiederum eine moderate Turbulenz im Innenraum 67 hervorgerufen, was einen Wärmeübergang beim Strömungskanal 91, 91' gemäß der Abwandlung in Fig. 14A und Fig. 14B vorteilhaft erhöht.

Zusammenfassend betrifft die Erfindung einen Strömungskanal 41, 41', 61, 61', 71, 71', 81, 81', 91, 91' für einen Wärmetauscher 30, 40 zum Wärmetausch zwischen einem ersten Fluid 31 und einem zweiten Fluid 33 aufweisend: einen stranggepressten Kanalmantel 63, 63', 73, 73', 83, 83', 93, 93' mit einem von einer Kanalmantelinnenseite 65 umgebenen Innenraum 67; eine Anzahl von im Innenraum 67 an der Kanalmantelinnenseite 65 angeordneten Stegen 69, 79, 79', 89, 89', 99, welcher Strömungskanal einen zur Führung des ersten Fluids 31 im Innenraum ausgelegten durchströmbaren Querschnitt quer zu einer Strömungskanalachse 94 aufweist. Um einen verbesserten Wärmeübergang bei gleichzeitig noch akzeptablem Druckverlust und reduziertem Verblockungsrisiko zu gewährleisten ist ein als das Vierfache des Verhältnisses aus der Fläche des durchströmbaren Querschnitts zu einem durch das Fluid benetzbaren Umfang definierter hydraulischer Durchmesser den in einem Bereich zwischen 1,5 mm und 6 mm vorgesehen. Die Erfindung führt auf einen Wärmetauscher, der einen Block mit einer Anzahl von Strömungskanälen dieser Art aufweist, die von dem ersten Fluid durchströmbar sind und die mit einem Fluidanschluss strömungsverbunden sind. Die Erfindung führt auf ein Ladeluftsystem, ein Abgasrückführsystem und eine Verwendung des Wärmetauschers.

In den Figuren 12A, 12B, 13A, 13B und 14A und 14B haben die Rippen eine Dicke von 0,1mm bis 0,6mm, insbesondere von 0,2mm bis 0,4mm, insbesondere 0,2mm bis 0,3mm.

In den Figuren 1, 2, 3, 4, 5, 6, 7, 8, 9A, 9B, 10A, 10B, 11A, 11B, 12A, 12B, 13A, 13B, 14A und 14B ist der hydraulische Durchmesser bei der Verwendung des Materials Aluminium derart auszubilden, dass die Stegtemperatur der Rippe und oder des Steges durch die bessere Wärmeleitfähigkeit geringer ist als bei der Ausbildung des Rohres aus Stahl. Durch die entsprechende Ausbildung des hydraulischen Durchmessers wird die Verschmutzungsneigung des Aluminium-Abgaskühlers vorteilhaft reduziert. Dieses Problem taucht bei Edelstahl-Abgaskühlern nicht auf, da die Rippentemperatur deutlich höher sind, so dass keine Neigung zur Verschmutzung herrscht.

In den Figuren 1, 2, 3, 4, 5, 6, 7, 8, 9A, 9B, 10A, 10B, 11A, 11B, 12A, 12B, 13A, 13B, 14A und 14B liegen die folgenden Verunreinigungen in den Strangpresswerkstoffen vor:
Silizium:Si<1% insbesondere Si<0,6%, insbesondere Si<0,15%
Eisen: Fe<1,2% insbesondere Fe<0,7%, insbesondere Fe<0,35%
Kupfer: Cu<0,5% insbesondere Cu<0,2%, insbesondere Cu<0,1%
Chrom: Cr<0,5% insbesondere 0,05%<Cr<0,25%, insbesondere 0,1%<Cr<0,25%
Magnesium: 0,02%<Mg<0,5% insbesondere 0,05<Mg<0,3%
Zink: Zu<0,5%, insbesondere 0,05%<Zn<0,3%
Titan: Ti<0,5%, insbesondere 0,05%<Ti<0,25%

Für eine hohe Kornfestigkeit der Aluminiumlegierungen sind die Korngrößen im Schnitt des Bauteils in Strangpressrichtung gemessen <250µm, insbesondere <100µm, insbesondere<50µm.

## Patentansprüche

1. Strömungskanal (41, 41', 61, 61', 71, 71', 81, 81', 91, 91') für einen Wärmetauscher (30, 40) - insbesondere einem Abgas-Wärmetauscher oder Ladeluft-Wärmetauscher - zum Wärmetausch zwischen einem ersten Fluid (31), insbesondere einem Abgas oder Abgas-Luft-Gemisch oder einer Ladeluft, und einem zweiten Fluid (33), insbesondere einem Kühlmittel, vorzugsweise einem flüssigen oder gasförmigen oder flüssig-gas-gemischten Kühlmittel - aufweisend:
- einen Kanalmantel (63, 63', 73, 73', 83, 83', 93, 93') mit einem von einer Kanalmantelinnenseite (65) umgebenen Innenraum 67);
- eine Anzahl von im Innenraum (67) an der Kanalmantelinnenseite (65) angeordneten Stegen (69, 79, 79', 89, 89', 99),
- welcher Strömungskanal einen zur Führung des ersten Fluids (31) im Innenraum ausgelegten durchströmbaren Querschnitt quer zu einer Strömungskanalachse (94) aufweist,
**gekennzeichnet durch**
einen als das vierfache des Verhältnisses aus der Fläche des durchströmbaren Querschnitts zu einem durch das erste Fluid benetzbaren Umfang definierten hydraulischen Durchmesser (dₕ), der in einem Bereich zwischen 1.5mm und 6mm liegt.

2. Strömungskanal nach Anspruch 1, **dadurch gekennzeichnet, dass** der hydraulische Durchmesser (dₕ) in einem Bereich zwischen 2mm und 5mm liegt, insbesondere zwischen 3.0mm und 3.4mm, zwischen 3.1 mm und 3.3mm, insbesondere bei 3.2mm.

3. Strömungskanal nach Anspruch 1 oder 2, **dadurch gekennzeichnet, dass** der hydraulische Durchmesser (dₕ) in einem Bereich zwischen 2.5mm und 4mm liegt, insbesondere zwischen 2.8mm und 3.8mm, insbesondere für einen Hochdruck-Wärmetauscher.

4. Strömungskanal nach Anspruch 1 oder 2, **dadurch gekennzeichnet, dass** der hydraulische Durchmesser (dₕ) in einem Bereich zwischen 2mm und 3.5mm liegt, insbesondere zwischen 2.5mm und 3.5mm, insbesondere für einen Niederdruck-Wärmetauscher.

5. Strömungskanal nach einem der Ansprüche 1 bis 4, **dadurch gekennzeichnet, dass** ein Verhältnis aus dem hydraulischen Durchmesser (dₕ) und einer Kanalmantelstärke (s) in einem Bereich zwischen 0.8 und 8, insbesondere in einem Bereich zwischen 1.2 und 6, insbesondere in einem Bereich zwischen 1.4 und 6 liegt.

6. Strömungskanal nach einem der Ansprüche 1 bis 5, **dadurch gekennzeichnet, dass** ein Verhältnis aus einer Stegstärke (d) und einer Kanalmantelstärke (s) unter 1.0 liegt.

7. Strömungskanal nach einem der Ansprüche 1 bis 6, **dadurch gekennzeichnet, dass** ein Verhältnis aus dem durch das erste Fluid benetzbaren Umfang und einem äußeren Umfang des Strömungskanals in einem Bereich zwischen 0.1 und 0.5 liegt.

8. Strömungskanal nach einem der Ansprüche 1 bis 7, **dadurch gekennzeichnet, dass** ein Verhältnis eines Abstands (e) zwischen zwei, insbesondere gegenüberliegenden und/oder gegeneinander versetzten Teilstegen zu einer Höhe (b) des Rohr-Querschnitts in einem Bereich unterhalb von 0.8, insbesondere in einem Bereich zwischen 0.3 und 0.7 liegt.

9. Strömungskanal nach einem der Ansprüche 1 bis 8, **dadurch gekennzeichnet, dass** ein Verhältnis eines Abstands (a₃) eines ersten Teilstegs zu einem Ganzsteg zu einem Abstand (a₄) eines zweiten Teilstegs zu dem Ganzsteg, in einem Bereich zwischen 0.5 und 0.9, insbesondere in einem Bereich zwischen 0.6 und 0.8 liegt.

10. Strömungskanal nach einem der Ansprüche 1 bis 9, **dadurch gekennzeichnet, dass** wenigstens der Kanalmantel, vorzugsweise der gesamte Strömungskanal, aus einem Werkstoff auf Aluminium-Basis ist.

11. Strömungskanal nach einem der Ansprüche 1 bis 9, **dadurch gekennzeichnet, dass** wenigstens der Kanalmantel, vorzugsweise der gesamte Strömungskanal, aus einem Werkstoff auf Stahl-Basis, insbesondere Edelstahl-Basis ist.

12. Strömungskanal nach einem der Ansprüche 1 bis 11, **dadurch gekennzeichnet, dass** der Kanalmantel als ein Rohr, insbesondere als ein geschweißtes Rohr und/oder gelötetes oder stranggepresstes Rohr, gebildet ist.

13. Strömungskanal nach einem der Ansprüche 1 bis 12, **dadurch gekennzeichnet, dass** wenigstens der Kanalmantel, vorzugsweise der gesamte Strömungskanal, als ein Strangpressprofil gebildet ist.

14. Strömungskanal nach einem der Ansprüche 1 bis 13, **dadurch gekennzeichnet, dass** der Kanalmantel durch Bleche, vorzugsweise verschweißte und/oder verlötete Bleche, gebildet ist.

15. Strömungskanal nach einem der Ansprüche 1 bis 14 **dadurch gekennzeichnet, dass** wenigstens ein Steg (69, 79, 79', 89, 89') ein, insbesondere mit dem Kanalmantel (63, 63', 73, 73', 83, 83'), stranggepresster Steg ist
